# EUROPEAN PATENT APPLICATION

(11) **EP 4 542 734 A1**
(43) Date of publication of application: **23.04.2025**
(21) Application number: 22947580.1
(22) Date of filing: 15.08.2022
(51) Int. Cl.: H01M 50/103

(54) **SEPARATOR, PREPARATION METHOD THEREFOR, AND SECONDARY BATTERY AND ELECTRICAL DEVICE RELATED THERETO**

(30) Priority: 24.06.2022 WO PCT/CN2022/101261
(71) Applicant: CONTEMPORARY AMPEREX TECHNOLOGY (HONG KONG) LIMITED, Hong Kong (HK)
(72) Inventor: WEI, Manxiang, Ningde, Fujian 352100 (CN); YANG, Jianrui, Ningde, Fujian 352100 (CN); XU, Ming, Ningde, Fujian 352100 (CN)
(74) Representative: Gong, Jinping
(86) International application number: PCT/CN2022/112587
(87) International publication number: WO 2023/245839

(57) **Abstract**

The present application provides a separator, a method for preparing the same and a secondary battery and an electrical device related thereto. The separator includes a porous substrate and a coating layer disposed on one or more surfaces of the porous substrate, wherein the coating layer includes nanocellulose and a filler, and the coating layer located on one side of the porous substrate has an areal density of σ g/m², the coating layer located on one side of the porous substrate has a thickness of H µm, and the separator satisfies 0.3 ≤ σ ≤ 1.65 and 0.7 ≤ σ/H ≤ 2.2. The separator of the present application has the characteristics of excellent heat resistance, high ion conductivity and good electrolyte infiltration and retention, so that a secondary battery using the separator can have the combined characteristics of high energy density, high thermal safety performance, and good capacity exertion.

## Description

### CROSS-REFERENCE TO RELATED APPLICATION

This application claims priority to PCT Patent application PCT/CN2022/101261 entitled "SEPARATOR, METHOD FOR PREPARING THE SAME AND SECONDARY BATTERY AND ELECTRICAL DEVICE RELATED THERETO" and filed on June 24, 2022, which is incorporated herein by reference in its entirety.

### TECHNICAL FIELD

The present application belongs to the field of battery technology, and in particular relates to a separator, a method for preparing the same, and a secondary battery and an electrical device related thereto.

### BACKGROUND

In recent years, secondary batteries have been widely used in energy storage power systems such as hydraulic, thermal, wind and solar power plants, as well as in many fields such as electric tools, electric bicycles, electric motorcycles, electric vehicles, military equipment, and aerospace. With the application and promotion of secondary batteries, their safety issues, especially thermal safety issues, have received more and more attention. However, the existing methods for improving the thermal safety performance of secondary batteries are often not conducive to balancing the energy density and capacity exertion of secondary batteries. Therefore, how to obtain a secondary battery having the combined characteristics of high energy density, high thermal safety performance and good capacity exertion characteristics at the same time is a key challenge in designing secondary battery.

### SUMMARY

An object of the present application is to provide a separator, a method for preparing the same and a secondary battery and an electrical device related thereto, wherein the separator has the characteristics including excellent heat resistance, high ion conductivity and good electrolyte infiltration and retention, so that a secondary battery using the separator can have the combined characteristics of high energy density, high thermal safety performance, and good capacity exertion.

A first aspect of the present application provides a separator, including a porous substrate and a coating layer disposed on one or more surfaces of the porous substrate, wherein the coating layer includes nanocellulose and a filler, and the coating layer located on one side of the porous substrate has an areal density of σ g/m², the coating layer located on one side of the porous substrate has a thickness of H µm, and the separator satisfies 0.3 ≤ σ ≤ 1.65 and 0.7 ≤ σ/H ≤ 2.2.

Through extensive studies, the inventors of the present application have unexpectedly found that by providing a coating layer including nanocellulose and a filler on one or more surfaces of the porous substrate of the separator and using a coating layer having an areal density σ g/m² and thickness H µm satisfying 0.3 ≤ σ ≤ 1.65 and 0.7 ≤ σ/H ≤ 2.2, the obtained separator can have the characteristics including excellent heat resistance, high ion conductivity and good electrolyte infiltration and retention, thus enable the secondary battery to have the combined characteristics of high energy density, high thermal safety performance, and good capacity exertion.

In some embodiments of the present application, 0.6 ≤ σ ≤ 1.5, optionally, 0.7 ≤ σ ≤ 1.3. As a result, this helps the nanocellulose and the filler in the coating layer to have a better overlap (making contact) effect.

In some embodiments of the present application, 0.9 ≤ σ/H ≤ 1.8, optionally, 0.9 ≤ σ/H ≤ 1.6. As a result, this helps the nanocellulose and the filler in the coating layer to have a better overlap effect.

In some embodiments of the present application, 0 < H ≤ 1.5, optionally, 0.5 ≤ H ≤ 0.8. As a result, this contributes to improving the energy density of the secondary battery.

In some embodiments of the present application, the porous substrate has an ion conductivity of λ₁ mS/cm, the separator has an ion conductivity of λ₂ mS/cm, and the separator satisfies: 1 < λ₁/λ₂ ≤ 3, optionally, 1.05 ≤ λ₁/λ₂ ≤ 1.8. As a result, this is beneficial to the transmission of active ions and the capacity exertion of secondary batteries.

In some embodiments of the present application, 0.5 ≤ λ₁ ≤ 1.8, optionally, 1.0 ≤ λ₁ ≤ 1.4.

In some embodiments of the present application, 0.2 ≤ λ₂ ≤ 1.5, optionally, 0.5 ≤ λ₂ ≤ 1.2.

In some embodiments of the present application, the nanocellulose includes one or more of unmodified nanocellulose and modified nanocellulose, and optionally is modified nanocellulose.

In some embodiments of the present application, the modified nanocellulose includes a modifying group, and the modifying group includes one or more of an amino group, a carboxylic acid group, an aldehyde group, a sulfonic acid group, a boric acid group, and a phosphoric acid group, and optionally includes one or more of a sulfonic acid group, a boric acid group, and a phosphoric acid group. When the nanocellulose has the above-mentioned specific modifying groups, on one hand, it can effectively improve the heat resistance of the separator, and improve the thermal safety performance of the secondary battery; on the other hand, it is further beneficial to the formation of a more stable spatial network structure by overlapping of the nanocellulose and the filler, thereby further improving the ion transport and voltage breakdown resistance characteristics of the separator.

In some embodiments of the present application, the modified nanocellulose includes a hydroxyl group and a modifying group, and a molar ratio of the modifying group to the hydroxyl group is from 1:4 to 4:1, optionally from 2:3 to 7:3. As a result, this can further improve the heat resistance and ion transport characteristics of the separator.

In some embodiments of the present application, the nanocellulose has an aspect ratio of from 5 to 80, optionally from 10 to 40. As a result, this can further improve the ion transport characteristic of the separator.

In some embodiments of the present application, the nanocellulose has an average diameter of ≤ 40 nm, optionally from 10 nm to 35 nm. As a result, this can further improve the ion transport and voltage breakdown resistance characteristics of the separator.

In some embodiments of the present application, the nanocellulose has an average length of from 100 nm to 600 nm, optionally from 200 nm to 450 nm. As a result, this can further improve the heat resistance and ion transport characteristics of the separator.

In some embodiments of the present application, the filler includes one or more of inorganic particles and organic particles. The presence of fillers helps the coating layer to have a stable spatial network structure, which may improve the ion transport property and heat resistance of the separator; In addition, it may also improve the tensile strength, puncture resistance and external force extrusion resistance of the separator.

In some embodiments of the present application, the filler has a decomposition temperature of 200°C or higher. As a result, the filler may have good thermal stability and be not easily decomposed, thereby improving the heat resistance of the separator.

In some embodiments of the present application, the inorganic particles includes one or more of inorganic particles with a dielectric constant of 5 or more, inorganic particles with ion conductibility but without ion storage capability and inorganic particles capable of undergoing electrochemical reactions.

In some embodiments of the present application, the inorganic particles with a dielectric constant of 5 or more include one or more of: oehmite, aluminum oxide (or alumina), zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃, Pb₁₋ₘLaₘZr₁₋ₙTiₙO₃, Pb(Mg₃Nb_{2/3})O₃-PbTiO₃ and their respective modified inorganic particles, 0<m<1, 0<n<1.

In some embodiments of the present application, the inorganic particles with ion conductibility but without ion storage capability include one or more of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3} and P₂S₅ type glass Liₓ₈P_{y8}S_{z4}, wherein 0 < x1 < 2, 0 < y1 < 3, 0 < x2 < 2, 0 < y2 < 1, 0 < z1 < 3, 0 < x3 < 4, 0 < y3 < 13, 0 < x4 < 2, 0 < y4 < 3, 0 < x5 < 4, 0 < y5 < 1, 0 < z2 < 1, 0 < w < 5, 0 < x6 < 4, 0 < y6 < 2, 0 < x7 < 3, 0 < y7 < 2, 0 < z3 < 4, 0 < x8 < 3, 0 < y8 < 3,0 < z4 < 7

In some embodiments of the present application, the inorganic particles capable of undergoing electrochemical reactions include one or more of lithium-containing transition metal oxides, lithium-containing phosphates, carbon-based materials, silicon-based materials, tin-based materials, and lithium-titanium compounds.

In some embodiments of the present application, the organic particles include one or more of polyethylene particles, polypropylene particles, polystyrene particles, cellulose, cellulose modifiers, melamine resin particles, phenolic resin particles, polyester particles, organic silicon resin particles, polyimide particles, polyamide imide particles, polyarylamide particles, polyphenylene sulfide particles, polysulfone particles, polyethersulfone particles, polyetheretherketone particles, polyaryletherketone particles, and copolymers of butyl acrylate and ethyl methacrylate, optionally include one or more of melamine formaldehyde resin particles, phenolic resin particles, polyester particles, organic silicon resin particles, polyimide particles, polyamide imide particles, polyarylamide particles, polyphenylene sulfide particles, polysulfone particles, polyethersulfone particles, polyetheretherketone particles, and polyaryletherketone particles.

In some embodiments of the present application, the nanocellulose in the coating layer is present in an amount of ≥ 8 wt.%, optionally from 10 wt.% to 35 wt.%, based on the total weight of the coating layer. When the amount of nanocellulose is in the appropriate ranges, it can ensure that the coating slurry has an appropriate viscosity, which is more conducive to coating process, in addition, it is further conducive to the formation of a stable spatial network structure by overlapping (or contacting) the nanocellulose with the filler. As a result, this can further improve the ion conductivity and external force extrusion resistance and voltage breakdown resistance of the separator.

In some embodiments of the present application, the filler in the coating layer is present in an amount of ≥ 50 wt.%, optionally from 65 wt.% to 90 wt.%, based on the total weight of the coating layer. As a result, this can ensure that the coating slurry has appropriate viscosity, which is more conducive to coating process; In addition, it is also beneficial to better overlap with the nanocellulose to form a stable spatial network structure, thereby further improving the tensile strength, puncture resistance, and external compression resistance of the separator.

In some embodiments of the present application, a mass ratio of the nanocellulose and the filler in the coating is from 0.1 to 0.95, and optionally from 0.18 to 0.6. As a result, this can further improve the comprehensive performance of the separator. For example, the separator can have the combined characteristics of high tensile strength, good puncture resistance, external force extrusion resistance and voltage breakdown resistance.

In some embodiments of the present application, the filler includes a primary particle morphology, a secondary particle morphology formed by agglomeration of primary particles or a combination thereof. The filler with secondary particle morphology has a relatively high specific surface area and better affinity with nanocellulose, thus can overlap with the nanocellulose to form a stable spatial network structure, thereby further improving the performance of the separator. The filler with primary particle morphology has a relatively high particle size, thus can better exert its supporting role in the coating layer, thereby enabling the coating layer to have suitable void fraction and pore/channel structure.

In some embodiments of the present application, the filler with primary particle morphology in the coating layer is present in an amount of from 50 wt.% to 100 wt.%, optionally from 90 wt.% to 99 wt.%, based on the total weight of the filler.

In some embodiments of the present application, the filler with primary particle morphology has an average particle size Dv50 of from 100 nm to 800 nm, optionally from 200 nm to 400 nm.

In some embodiments of the present application, the filler with secondary particle morphology has an average particle size Dv50 of ≤ 200 nm, optionally from 50 nm to 200 nm.

In some embodiments of the present application, the filler with primary particle morphology has a specific surface area of ≤ 10 m²/g, optionally from 4 m²/g to 9 m²/g.

In some embodiments of the present application, the filler with secondary particle morphology has a specific surface area of ≥ 20 m²/g, optionally from 25 m²/g to 50 m²/g.

In some embodiments of the present application, the porous substrate has a thickness of ≤ 6 µm, optionally from 3 µm to 5 nm. As a result, this contributes to improving the energy density of the secondary battery.

In some embodiments of the present application, the porous substrate has a porosity of from 30% to 60%. As a result, this facilitates further improving the ion transport characteristic of the separator while ensuring high heat resistance of the separator.

In some embodiments of the present application, the coating layer further includes a non-granular binder. Optionally, the non-granular binder includes an aqueous solution-type binder. As a result, this facilitates the preparation and coating processes of the coating slurry.

In some embodiments of the present application, the non-granular binder in the coating layer is present in an amount of < 1 wt.%, based on the total weight of the coating layer. The present application allows the separator to maintain high adhesiveness and good ion transport characteristic under the premise of reducing the amount of binder.

In some embodiments of the present application, the separator further includes an adhesive layer, the adhesive layer is disposed on at least part of surface of the coating layer, and the adhesive layer includes a granular binder. The adhesive layer can not only prevent the coating layer from peeling off and improve the safety performance of the secondary battery, but also improve the interface between the separator and the electrode and improve the cycle performance of the secondary battery. Optionally, the granular binder includes one or more of a homopolymer or copolymer of acrylate monomer, a homopolymer or copolymer of acrylic monomer, a homopolymer or copolymer of fluorine-containing olefin monomer.

In some embodiments of the present application, the separator has a longitudinal thermal shrinkage rate at 150 °C for 1 h of ≤ 6.5%, optionally from 0.5% to 3%.

In some embodiments of the present application, the separator has a lateral thermal shrinkage rate at 150 °C for 1 h of ≤ 6.5%, optionally from 0.5% to 3%.

The separator of the present application has low thermal shrinkage rate in both the lateral direction and the longitudinal direction at high temperature of 150°C, which can further improve the safety performance of the secondary battery.

In some embodiments of the present application, the separator has a longitudinal tensile strength of ≥ 2000 kg/cm², optionally from 2500 kg/m² to 4500 kg/m².

In some embodiments of the present application, the separator has a lateral tensile strength of ≥ 2000 kg/cm², optionally from 2500 kg/m² to 4500 kg/m².

The separator of the present application has high tensile strength in both the lateral direction and the longitudinal direction, which results in small probability of breakage of the separator when the secondary battery is expanded, thereby further improving the safety performance of the secondary battery.

In some embodiments of the present application, the separator has a wetting length of ≥ 30 mm, optionally from 30 mm to 80 mm.

In some embodiments of the present application, the separator has a wetting speed of ≥ 3 mm/s, optionally from 3 mm/s to 10 mm/s.

The separator of the present application has good electrolyte infiltration characteristics, which can improve the ion transport characteristics and the capacity exertion of the secondary battery.

In some embodiments of the present application, the separator has an air permeability of ≤ 220 s/100 mL, optionally from 100 s/100 mL to 180 s/100 mL. The separator of the present application has high air permeability, which can improve the ion transport characteristic.

A second aspect of the present application provides a method for preparing the separator according to the first aspect of the present application, comprising the following steps: S1, providing a porous substrate; S2, formulating a coating slurry: mixing nanocellulose and a filler in a predetermined proportion in a solvent to prepare the coating slurry; S3, coating: coating one or more surface of the porous substrate with the coating slurry to form a coating layer, and drying to obtain a separator, wherein the separator comprises a porous substrate and a coating layer disposed on one or more surfaces of the porous substrate, wherein the coating layer comprises nanocellulose and a filler, the coating layer located on one side of the porous substrate has an areal density of σ g/m², the coating layer located on one side of the porous substrate has a thickness of H µm, and the separator satisfies 0.3 ≤ σ ≤ 1.65 and 0.7 ≤ σ/H ≤ 2.2.

The method for preparing the separator of the present application provides a coating layer through one coating process, which greatly simplifies the production process of the separator.

In some embodiments of the present application, the method further includes the step of: S4, secondary coating: coating at least part of surface of the coating layer with a slurry containing a granular binder, and drying to form an adhesive layer.

A third aspect of the present application provides a secondary battery, including the separator of the first aspect of the present application or the separator prepared by the method of the second aspect of the present application.

A fourth aspect of the present application provides an electrical device, including the secondary battery according to the third aspect of the present application.

The separator of the present application can have the characteristics including excellent heat resistance, high ion conductivity and good electrolyte infiltration and retention, thus enable the secondary battery to have the combined characteristics of high energy density, high thermal safety performance, and good capacity exertion. The electrical device of the present application includes the secondary battery provided by the present application, and thus has at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on these drawings without creative work.
Fig. 1 is a schematic diagram of an embodiment of a secondary battery of the present application.
Fig. 2 is an exploded schematic diagram of the embodiment of the secondary battery as shown in Fig. 1.
Fig. 3 is a schematic diagram of a battery module according to an embodiment of the present application.
Fig. 4 is a schematic diagram of a battery pack according to an embodiment of the present application.
Fig. 5 is an exploded schematic diagram of the embodiment of the battery pack as shown in Fig. 4.
Fig. 6 is a schematic diagram of an embodiment of an electrical device of the present application as a powder supply.

In the drawings, the drawings are not necessarily drawn to scale. The reference numerals are defined as follows: 1- battery pack; 2- upper case body; 3-lower case body; 4-battery module; 5-secondary battery; 51-housing; 52-electrode assembly; and 53-cover.

### DETAILED DESCRIPTION

Hereafter, embodiments of the separator, the preparation method therefor and the secondary battery and electrical device related thereto of the present application will be specifically described in detail with appropriate references to the accompanying drawings. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following description are provided for those skilled in the art to fully understand the present application, and are not intended to limit the subject matter described in the claims.

A "range" disclosed herein is defined in terms of lower and upper limits, and a given range is defined by selecting a lower limit and an upper limit that define the boundaries of the particular range. Ranges defined in this manner may be inclusive or exclusive of end values and may be combined arbitrarily, that is, any lower limit may be combined with any upper limit to form a range. For example, if ranges of 60-120 and 80-110 are listed for a particular parameter, it is to be understood that ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such a technical solution should be considered to be included in the disclosure of the present application.

Unless stated otherwise, all technical features and optional technical features of the present application can be combined with each other to form a new technical solution, and such a technical solutions should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprise steps (a), (b) and (c), steps (a), (c) and (b), or steps (c), (a) and (b), and the like.

Unless stated otherwise, the transition phases "comprising" and "including" mentioned in the present application means that it is drafted in an open mode or in a close mode. For example, the transition phases "comprising" and "including" may mean that other components not listed may also be included or contained, or only the listed components may be included or contained.

In the present application herein, unless otherwise stated, the term "or" is inclusive. For example, the phrase "A or B" means "A, B, or both A and B." More specifically, any of the following conditions satisfy the condition "A or B": A is true (or exists) and B is false (or does not exist); A is false (or does not exist) and B is true (or exists), or both A and B are true (or exist).

In this application, the terms "plurality" and "multiple" and "several" refer to two or more.

Unless otherwise specified, the terms used in this application have the well-known meanings generally understood by those skilled in the art.

Unless otherwise specified, a numerical value for each parameter mentioned in the present application can be determined by various test methods commonly used in the art, for example, can be determined according to the test methods given in the Examples of the present application.

Normally, a secondary battery comprises an electrode assembly and an electrolyte, and the electrode assembly comprises a positive electrode plate, a negative electrode plate and a separator, the separator is disposed between the positive electrode plate and the negative electrode plate and is mainly used to prevent short circuit between positive electrode and negative electrode and meanwhile allows active ions to pass through to form a circuit.

With the application and promotion of secondary batteries, the requirements for energy density of secondary battery are getting higher and higher. Thinning the separator is an effective measure to increase energy density of secondary batteries and reduce the internal resistance of batteries. Currently, the separators used in commercial secondary batteries are usually polyolefin porous films, such as polyethylene porous films, polypropylene porous films or polypropylene/polyethylene/polypropylene three-layer composite films, with melting points between 130°C and 160°C. As a result, when the thickness of the separator is reduced, the heat resistance of the separator will deteriorate, and the separator will shrink severely when heated, thereby increasing the risk of short circuit between positive electrode and negative electrode.

In addition, the separator also needs to satisfy good wettability and retention characteristics for the electrolytic solution. In the long-term charging and discharging process of the secondary battery, the separator gradually dries up and fails, which is an important reason for the capacity decline of the secondary battery. This is because the internal resistance of the battery increases after the separator dries up, which leads to the incomplete charging and discharging, and then leads to the rapid decay of the capacity of the secondary battery, which greatly reduces the service life of the secondary battery. Moreover, when the separator is thinned, its electrolyte wettability and retention characteristics further deteriorate, thereby further exacerbating the capacity attenuation.

In order to solve the above problems, the current measures are mainly to apply a heat-resistant inorganic ceramic layer on the polyolefin porous film, which can increase the mechanical strength of the separator, reduce the shrinkage of the separator when heated, and reduce the risk of short circuit between positive electrode and negative electrode. However, commercially available inorganic ceramic particles have relatively large particle size, thus will increase the overall thickness of the separator, resulting in the inability to balance the energy density of secondary batteries, especially in the field of power batteries, which is not conducive to increasing the cruising range. In addition, due to the relatively large particle size of inorganic ceramic particles, the number of layers laminated on the polyolefin porous film is reduced (usually ≤ 5 layers), which results in limited improvement in the heat resistance of the separator.

Nanosizing inorganic ceramic particles can reduce the thickness of the coating and alleviate the adverse impact on the energy density of secondary batteries. However, the coating formed by nanosized inorganic ceramic particles has low porosity and the nanosized inorganic ceramic particles will easily block the micropores of the polyolefin porous film, thus leading to the reduction of overall porosity of the separator and an increase of the ionic impedance of the separator, and inhibiting active ion transport. Meanwhile, due to the high specific surface area of nanosized inorganic ceramic particles and the contact between particles being point contact, a large amount of binder is required to ensure the adhesiveness between particles, whereas the large amount of binder will lead to the problem of blocking pores, which is detrimental to the rate performance of the secondary battery, for example, the easy formation of dendrites on the surface of the negative electrode, which is in turn further detrimental to the capacity and energy density of secondary batteries.

Therefore, the separator in the existing art often struggles to have the combined characteristics of high energy density, high thermal safety performance and good capacity exertion of secondary battery.

The inventors of the present application have unexpectedly found during the research that by providing a coating layer including nanocellulose and a filler on surface of the porous substrate of the separator and reasonably controlling the relationship between the areal density and the thickness of the coating layer, it enables the separator to have the characteristics including excellent heat resistance, high ion conductivity and good electrolyte infiltration and retention, thus enables the secondary battery to have the combined characteristics of high energy density, high thermal safety performance, and good capacity exertion.

### Separator

Specifically, the first aspect of embodiments of the present application provides a separator, comprising a porous substrate and a coating layer disposed on one or more surfaces of the porous substrate, wherein the coating layer comprises nanocellulose and a filler, and the coating layer located on one side of the porous substrate has an areal density of σ g/m², the coating layer located on one side of the porous substrate has a thickness of H µm, and the separator satisfies 0.3 ≤ σ ≤ 1.65 and 0.7 ≤ σ/H ≤ 2.2.

Through extensive studies, the inventors of the present application have unexpectedly found that by providing a coating layer including nanocellulose and a filler on one or more surfaces of the porous substrate of the separator and using a coating layer having an areal density σ g/m² and thickness H µm satisfying 0.3 ≤ σ ≤ 1.65 and 0.7 ≤ σ/H ≤ 2.2, the obtained separator can have the characteristics including excellent heat resistance, high ion conductivity and good electrolyte infiltration and retention, thus enable the secondary battery to have the combined characteristics of high energy density, high thermal safety performance, and good capacity exertion.

Although the mechanism is not very clear, the inventors of the present application anticipate the possible reasons including the following points: First, by adjusting the areal density and the thickness of the coating layer within the above ranges of the present application, it facilitates overlapping the nanocellulose with the filler in the coating layer to form a stable spatial network structure, thereby increasing the ion conduction channel, which is beneficial to active ion transport and capacity exertion of the secondary battery; Second, since the nanocellulose and the filler in the coating layer overlap to form a stable spatial network structure, the coating layer can have uniform nanopores, and thus the separator can further have good liquid absorption and wettability characteristics and retention characteristics for the electrolyte; Third, by adjusting the areal density and the thickness of the coating layer within the above ranges of the present application, it further helps the coating layer to have high heat resistance and can reduce the degree of shrinkage of the separator when heated, and reduce the risk of short circuit between the positive electrode and the negative electrode, which enables the secondary battery to have high thermal safety performance, Fourth, since the coating layer of the present application has high heat resistance, thus thinner porous substrates can be used, and thus the secondary battery can further have high energy density.

The areal density σ g/m² and the thickness H µm of the coating layer satisfy 0.7 ≤ σ/H ≤ 2.2. For example, σ/H may be 0.8, 0.9, 1.0, 1.1, 1.2, 1.3, 1.4, 1.5, 1.6, 1.7, 1.8, 1.9, 2.0, 2.1, 2.2 or any of the ranges formed by the above values. In some embodiments, optionally, the area density σ g/m² and the thickness H µm of the coating layer satisfy 0.8 ≤ σ/H ≤ 2.0, 0.85 ≤ σ/H ≤ 1.8, 0.9 ≤ σ/H ≤ 1.8, 0.9 ≤ σ/H ≤ 1.7, 0.9 ≤ σ/H ≤ 1.6 or 0.9 ≤ σ/H ≤ 1. 5. As a result, this helps the nanocellulose and the filler in the coating layer to have a better overlap effect, for example forming a coating layer with better heat resistance, electrolyte wettability and retention characteristics.

The areal density σ g/m² of the coating layer satisfies 0.3 ≤ σ ≤ 1.65. For example, σ is 0.4, 0.5, 0.6, 0.7, 0.8, 0.9, 1.0, 1.1, 1.2, 1.3, 1.4, 1.5 or any of the ranges formed by the above values. In some embodiments, optionally, the areal density σ g/m² of the coating layer satisfies 0.4 ≤ σ ≤ 1.5, 0.5 ≤ σ ≤ 1.5, 0.6 ≤ σ ≤ 1.5, 0.7 ≤ σ ≤ 1.5, 0.7 ≤ σ ≤ 1.4, 0.7 ≤ σ 1.3 or 0.7 ≤ σ ≤ 1.2. As a result, this helps the nanocellulose and the filler in the coating layer to have a better overlap effect, for example forming a coating layer with better heat resistance, electrolyte wettability and retention characteristics.

In some embodiments, optionally, the thickness H µm of the coating satisfies 0 < H ≤ 1.5. For example, H may be 0.1, 0.2, 0.3, 0.4, 0.5, 0.6, 0.7, 0.8, 0.9, 1.0, 1.1, 1.2, 1.3, 1.4, 1.5 or any of the ranges formed by the above values. More optionally, 0 < H ≤ 1.4, 0 < H ≤ 1.3, 0 < H ≤ 1.2, 0 < H ≤ 1.1, 0 < H ≤ 1.0, 0 < H ≤ 0.9, 0 < H ≤ 0.8, 0.1 ≤ H ≤ 0.8, 0.2 ≤ H ≤ 0.8, 0.3 ≤ H ≤ 0.8, 0.4 ≤ H ≤ 0.8 or 0.5 ≤ H ≤ 0.8. As a result, this contributes to improving the energy density of the secondary battery.

The inventors have found in further research that when the ion conductivity λ₁ mS/cm of the porous substrate and the ion conductivity λ₂ mS/cm of the separator further satisfy 1 < λ₁/λ₂ ≤ 3, it can ensure that the separator has good air permeability and the electrolyte infiltration and retention characteristics, which is conducive to active ion transport and capacity exertion of secondary battery. Moreover, it can effectively avoid the following situation: when λ₁/λ₂ is greater than 3, the coating layer has too small porosity or poor electrolyte wettability and retention characteristics, resulting in higher ion impedance of the coating layer, which is not conducive to the active ion transport and the capacity exertion of secondary battery. Optionally, 1.0 < λ₁/λ₂ ≤ 2, 1.0 < λ₁/λ₂ ≤ 1.8, 1.0 < λ₁/λ₂ ≤ 1.7, 1.0 < λ₁/λ₂ ≤ 1.6, 1.0 < λ₁/λ₂ ≤ 1.5, 1.0 < λ₁/λ₂ ≤ 1.4, 1.0 < λ₁/λ₂ ≤ 1.3, 1.05 ≤ λ₁/λ₂ ≤ 2, 1.05 ≤ λ₁/λ₂ ≤ 1.8, 1.05 ≤ λ₁/λ₂ ≤ 1.7, 1.05 ≤ λ₁/λ₂ ≤ 1.6, 1.05 ≤ λ₁/λ₂ ≤ 1.5, 1.05 ≤ λ₁/λ₂ ≤ 1.4 or 1.05 ≤ λ₁/λ₂ ≤ 1.3.

In some embodiments, the ion conductivity λ₁ mS/cm of the porous substrate may satisfy 0.5 ≤ λ₁ ≤ 1.8, optionally 1.0 ≤ λ₁ ≤ 1.4.

In some embodiments, the ionic conductivity λ₂ mS/cm of the separator may satisfy 0.2 ≤ λ₂ ≤ 1. 5, optionally 0.5 ≤ λ₂ ≤ 1.2.

Ionic conductivity of the porous substrate and ionic conductivity of the separator may be tested through AC impedance spectroscopy experiment. Specifically, the porous substrate or separator is cut into a disc with a certain area, dried, placed between two stainless steel electrodes. After the disc absorbs a sufficient amount of electrolyte and is then sealed, a button cell is formed. An AC impedance spectroscopy experiment is carried out. In the obtained AC impedance spectrum, the intersection point of the linear part and the real axis represents the bulk resistance of the electrolyte, and then the ion conductivity of the porous substrate or the separator can be calculated according to the formula σ = (L/A) × R. L denotes the thickness (cm) of the porous substrate or the separator, and A denotes the contact area (cm²) of the stainless steel electrode with the porous substrate or separator, and R denotes the bulk resistance of the electrolyte (mS). The electrolyte as used may be formulated by the following way: mixing ethylene carbonate (EC), ethyl methyl carbonate (EMC), and diethyl carbonate (DEC) in a volume ratio of 30:50:20 to obtain an organic solvent, and then dissolving a fully dried LiPF₆ in the above organic solvent, to prepare an electrolyte with a concentration of 1 mol/L.

In some embodiments, the porous substrate may have a porosity of from 30% to 60%. When the porosity of the porous substrate is in the appropriate range, it facilitates further improving the ion transport characteristic of the separator under the premise of ensuring high heat resistance of the separator.

In some embodiments, the porous substrate may have a thickness of ≤ 6 µm, optionally from 3 µm to 5 nm. The coating layer of the present application may significantly improve the heat resistance of the separator, so that a thinner porous substrate can be used, thus contributing to improving the energy density of the secondary battery.

The material of the porous substrate is not specially limited in the present application, and any well-known substrate with good chemical and mechanical stability may be used, for example, one or more of glass fibers, nonwoven fabrics, polyethylene, polypropylene, and polyvinylidene fluoride. The porous substrate may be a single-layer film or a multilayer composite film. When the porous substrate is a multilayer composite film, the materials of individual layers may be the same or different.

Another direction of increasing the energy density of secondary batteries is to increase the voltage, for example, using high-voltage positive electrode active materials. However, increasing the voltage will have a significant impact on the stability of the separator, and thus requires the separator to have good voltage breakdown resistance property.

The coating layer of the separator of this application comprises nanocellulose, which is a general term for cellulose with any one dimensional size of nano-scale (e.g., 100 nm or lower). The nanocellulose has the properties of both cellulose and nanoparticles. Nanocellulose may be a polymer nanomaterial extracted from wood, cotton, and other materials in nature through one or more means in chemistry, physics, biology, etc. It has the advantages of wide sources, low cost, biodegradability, high modulus and high specific surface area, so it is an excellent substitute for traditional petrochemical resources and can effectively alleviate environmental pollution and shortage of petrochemical resources. Nanocellulose also has good high temperature resistance, and relatively small volume change after being heated, which can improve the heat resistance of the separator, at the same time, compared with traditional inorganic ceramic particles, nanocellulose has smaller density, which may further reduce the weight of secondary batteries and improve the weight energy density of secondary batteries. In addition, nanocellulose can further enable the coating layer to have fine nano-pores and prevent current leakage, thus enabling the separator to have both high ion transport characteristic and good voltage breakdown resistance characteristic.

In some embodiments, the nanocellulose may comprise one or more of cellulose nanofibers (CNF, also referred to as nanofibril cellulose or microfibril cellulose), cellulose nanowhiskers (CNC, also referred to as cellulose nanocrystals, nanocrystalline cellulose), and bacterial nanocellulose (BNC, also referred to as bacterial cellulose or microbial cellulose), and optionally is cellulose nanowhiskers. The cellulose nanowhiskers may have higher crystallinity, thereby reducing their hydrophilicity, which in turn facilitates moisture discharge during the drying process and thus results in lower moisture content in the coating layer of the present application.

In some embodiments, the nanocellulose comprises one or more of unmodified nanocellulose (also referred to as hydroxyl nanocellulose) and modified nanocellulose, and optionally is modified nanocellulose.

The modified nanocellulose comprises a modifying group. In some embodiments, the modifying group comprises one or more of an amino group, a carboxylic acid group, an aldehyde group, a sulfonic acid group, a boric acid group, and a phosphoric acid group, and optionally comprises one or more of a sulfonic acid group, a boric acid group, and a phosphoric acid group.

The inventors have found in further research that When the nanocellulose has the above-mentioned specific modifying groups, on one hand, it can effectively improve the heat resistance of the separator, and improve the thermal safety performance of the secondary battery; on the other hand, it is further beneficial to the formation of a more stable spatial network structure by overlapping of the nanocellulose and the filler, thereby further improving the ion transport and voltage breakdown resistance characteristics of the separator, thereby being beneficial to matching with the high-voltage positive electrode active materials and further improving the energy density of the secondary battery.. In addition, the presence of modifying groups may further reduce the proportion of hydroxyl groups, which can ensure that the coating slurry has an appropriate viscosity and is thus more conducive to coating process, thereby improving the production efficiency of separator and the uniformity of coating layer.

In some embodiments, the modified nanocellulose comprises a hydroxyl group and a modifying group, and a molar ratio of the modifying group to the hydroxyl group may be from 1:4 to 4: 1, optionally from 2:3 to 7:3. When the molar ratio of the modifying group to the hydroxyl group is in the appropriate ranges, the heat resistance and ion transport characteristics of the separator can be further improved. In addition, it can effectively avoid the following situations: when the molar ratio of the modifying group to the hydroxyl group is too small, the further improvement effect of the modifying group on the heat resistance and ion transport characteristics of the separator may not be apparent; when the molar ratio of modifying group to hydroxyl group is too high, the electrolyte infiltration and retention characteristics of the separator may deteriorate, thus the ion transport property of the separator may become worse, which may affect the cycle performance and safety performance of the secondary battery and meanwhile may also lead to the decline of the heat resistance of the separator and may further affect the thermal safety performance of the secondary battery.

The types of modifying group in nanocellulose may be determined by infrared spectroscopy. For example, the infrared spectrum may be used for test a material by determine the characteristic peaks contained in the material, thus determining the types of modifying group. Specifically, instruments and methods known in the field, for example an infrared spectrometer (such as IS10 Fourier transform infrared spectrometers of Nicolet Company in the United States), may be used for performing an analysis of infrared spectrum of a material according to GB/T 6040-2019 General Rules for Infrared Analysis.

In some embodiments, the nanocellulose has an aspect ratio of from 5 to 80, optionally from 10 to 40. When the aspect ratio of the nanocellulose is in the appropriate ranges, the ion transport characteristics of the separator can be further improved. In addition, it can effectively avoid the following situations: when the aspect ratio of nanocellulose is too small, the making-contact effect between nanocellulose and filler is relatively poor, and the heat resistance of the coating layer becomes worse; in the drying process of the coating layer, part of nanocellulose may easily collapse due to lack of the supporting function of filler, and then easily lead to pore plugging problems, and hinder active ion transport, and affect the cycle performance and capacity exertion of the secondary battery; when the aspect ratio of nanocellulose is too high, the formed nanopores are relatively small, which may also lead to the deterioration of ion transport property of the separator.

In some embodiments, the nanocellulose may have an average diameter of ≤ 40 nm, optionally from 10 nm to 35 nm. When the average diameter of the nanocellulose is within the appropriate ranges, the ion transport property and voltage breakdown resistance property of the separator may be further improved. In addition, it can effectively avoid the following situations: when the average diameter of nanocellulose is too high, the formed nanopores in the coating layer are relatively large, which may lead to poor voltage breakdown resistance of the separator; moreover, the making-contact effect between nanocellulose and filler is relatively poor, thus the heat resistance of the coating layer becomes worse; in the drying process of the coating layer, part of nanocellulose may easily collapse due to lack of the supporting function of filler, and then easily lead to pore plugging problems, and hinder active ion transport, and affect the cycle performance and capacity of the secondary battery.

In some embodiments, the nanocellulose has an average length of from 100 nm to 600 nm, optionally from 200 nm to 450 nm. When the average length of the nanocellulose is in the appropriate ranges, the heat resistance and ion transport properties of the separator may be further improved. In addition, it can effectively avoid the following situations: when the average length of nanocellulose is too small, the overlap (making-contact) effect between nanocellulose and filler is relatively poor, thus the heat resistance of the coating layer becomes worse; in the drying process of the coating layer, part of nanocellulose may easily collapse due to lack of the supporting function of filler, and then easily lead to pore plugging problems, and hinder active ion transport, and affect the cycle performance and capacity exertion of the secondary battery; when the average length of nanocellulose is too high, the coating slurry has high viscosity and poor flow, which may affect the application of coating slurry and thus the coating quality of coating slurry, such as heat resistance and ion transport properties of the separator.

The average length and average diameter of nanocellulose may be measured by the following method: cutting a sample of 3.6 mm × 3.6 mm from any area of the separator, mapping the micro-morphology and structure of the coating layer in the sample by scanning electron microscope (such as ZEISS Sigma 300) using high vacuum mode and a working voltage of 3kV and magnification of 30,000 times, to obtain SEM images; selecting several (for example, 5 or more) test areas for statistically recording lengths according to the obtained SEM images, with each test area having a size of 0.5 µm × 0.5 µm, and then taking the average of the lengths obtained from individual test areas as the average length of nanocellulose; selecting several (for example, 5 or more) test areas for statistically recording diameters using Nano Measurer particle size distribution statistics software according to the obtained SEM images, with each test area having a size of 0.5 µm × 0.5 µm, and then taking the average of the diameters obtained from individual test areas as the average diameter of nanocellulose.

In some embodiments, the nanocellulose may have a shape including one or more of tubular (e.g. hollow tubular), fibrous shape and rod shape. Appropriate shape of nanocellulose is more conducive to the formation of a stable spatial network structure by contacting with filler, which can further improve the ion transport property and external force extrusion resistance of the separator.

In some embodiments, the nanocellulose in the coating layer may be present in an amount of ≥ 8 wt.%, optionally from 10 wt.% to 35 wt.%, based on the total weight of the coating layer. When the amount of nanocellulose is in the appropriate ranges, it can ensure that the coating slurry has an appropriate viscosity, which is more conducive to coating process; in addition, it is further conducive to the formation of a stable spatial network structure by overlapping (or contacting) the nanocellulose with the filler. As a result, this can further improve the ion conductivity and external force extrusion resistance and voltage breakdown resistance of the separator.

During the long-term charge and discharge of the secondary battery, the volume of the whole battery will increase due to the irreversible changes of microstructure of the positive electrode active materials and negative electrode active materials. Especially, when the secondary battery is charged rapidly, the increase of the volume of the negative electrode active materials is higher after the intercalation of active ions. After the expansion of the battery, the separator will be squeezed and/or stretched, which will easily lead to the damage of the separator and thus increase the risk of short circuit between positive electrode and negative electrode. Therefore, the separator is also required to have good external force extrusion resistance. The presence of fillers helps the coating layer to have a stable spatial network structure, which may improve the ion transport property and heat resistance of the separator; In addition, it may also improve the tensile strength, puncture resistance and external force extrusion resistance of the separator.

In some embodiments, the filler may comprise one or more of inorganic particles and organic particles.

In some embodiments, optionally, the decomposition temperature of the filler is 200°C or higher, the filler may have good thermal stability property and be not easily decomposed, thereby further improving the heat resistance of the separator.

Inorganic particles have good thermal stability and cannot be easily decomposed, and usually have hydroxyl groups on their surfaces, so they can easily make contact with nanocellulose to form a stable spatial network structure. In some embodiments, optionally, the inorganic particles include one or more of inorganic particles with a dielectric constant of 5 or more, inorganic particles with ion conductibility but without ion storage capability, and inorganic particles capable of undergoing electrochemical reactions.

Optionally, the inorganic particles with a dielectric constant of 5 or more comprise one or more of: oehmite, aluminum oxide (or alumina), zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃ (abbreviated as PZT), Pb₁₋ₘLaₘZr₁₋ₙTiₙO₃ (abbreviated as PLZT, 0<m<1, 0<n<1), Pb(Mg₃Nb_{2/3})O₃-PbTiO₃ (abbreviated as PMN-PT) and their respective modified inorganic particles. Optionally, the modification mode of each inorganic particle may be chemical modification and/or physical modification. The chemical modification mode includes coupling agent modification (by using for example silane coupling agent, titanate coupling agent, etc.), surfactant modification, and polymer grafting modification, etc. The physical modification mode may be mechanical force dispersion, ultrasonic dispersion, high-energy treatment and the like. Through modification treatment, the agglomeration of inorganic particles may be reduced, thus forming a more stable and more uniform spatial network structure by contacting inorganic particles with nanocellulose; in addition, by modifying inorganic particles with surface active materials or polymer or coupling agents with specific functional groups, it also helps to improve the electrolyte infiltration and retention characteristic of the coating layer and the adhesiveness between the coating layer and the porous substrate.

Optionally, the inorganic particles with ion conductibility but without ion storage capability comprise one or more of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3} and P₂S₅ type glass Liₓ₈P_{y8}S_{z4}, wherein 0 < x1 < 2, 0 < y1 < 3, 0 < x2 < 2, 0 < y2 < 1, 0 < z1 < 3, 0 < x3 < 4, 0 < y3 < 13, 0 < x4 < 2, 0 < y4 < 3, 0 < x5 < 4, 0 < y5 < 1, 0 < z2 < 1, 0 < w < 5, 0 < x6 < 4, 0 < y6 < 2, 0 < x7 < 3, 0 < y7 < 2, 0 < z3 < 4, 0 < x8 < 3, 0 < y8 < 3, 0 < z4 < 7. As a result, this can further improve the ion transport property of the separator.

Optionally, the inorganic particles capable of undergoing electrochemical reactions comprise one or more of lithium-containing transition metal oxides, lithium-containing phosphates, carbon-based materials, silicon-based materials, tin-based materials, and lithium-titanium compounds.

Organic particles have good thermal stability property and cannot be easily decomposed, which can improve the heat resistance of the separator; at the same time, when the internal temperature of the secondary battery reaches the melting point of organic particles due to overcharge abuse and heat abuse, the organic particles may melt and be sucked into the micropores of the porous substrate due to capillary action, which results in closing pores and breaking circuits and thus facilitates the high safety performance of the secondary battery.

In some embodiments, the organic particles comprise, but are not limited to, one or more of polyethylene particles, polypropylene particles, polystyrene particles, cellulose, cellulose modifiers (e.g. carboxymethylcellulose), melamine resin particles, phenolic resin particles, polyester particles (e.g. polyethylene terephthalate, polyethylene naphthalate, polybutylene terephthalate), organic silicon resin particles, polyimide particles, polyamide imide particles, polyarylamide particles, polyphenylene sulfide particles, polysulfone particles, polyethersulfone particles, polyetheretherketone particles, polyaryletherketone particles, and copolymers of butyl acrylate and ethyl methacrylate (e.g. crosslinked polymers of butyl acrylate and ethyl methacrylate).

In some embodiments, optionally, the glass transition temperature of the organic particles may be 130°C or higher. Therefore, when the internal temperature of the secondary battery reaches 130°C, the organic particles will not change from the glassy state to the viscous flow state, thus ensuring that the separator does not shrink violently. More optionally, the organic particles include but are not limited to one or more of melamine formaldehyde resin particles, phenolic resin particles, polyester particles, organosilicon resin particles, polyimide particles, polyamide imide particles, polyarylamide particles, polyphenylene sulfide particles, polysulfone particles, polyether sulfone particles, polyether ether ketone particles, and polyarylene ether ketone particles.

In some embodiments, the filler in the coating layer may be present in an amount of ≥ 50 wt.%, optionally from 65 wt.% to 90 wt.%, based on the total weight of the coating layer. As a result, this can ensure that the coating slurry has appropriate viscosity, which is more conducive to coating process; In addition, it is also beneficial to the overlap between the filler and the nanocellulose to form a stable spatial network structure, thereby further improving the tensile strength, puncture resistance, and external compression resistance of the separator.

In some embodiments, a mass ratio of the nanocellulose and the filler in the coating layer is from 0.1 to 0.95, and optionally from 0.18 to 0.6, and more optionally from 0.18 to 0.6. As a result, this can further improve the comprehensive performance of the separator. For example, the separator can have the combined characteristics of high tensile strength, good puncture resistance, external force extrusion resistance and voltage breakdown resistance.

In some embodiments, the filler comprises a primary particle morphology, a secondary particle morphology formed by agglomeration of primary particles, or a combination thereof. The filler with secondary particle morphology has a relatively high specific surface area and better affinity with nanocellulose, thus can overlap with the nanocellulose to form a stable spatial network structure, thereby further improving the performance of the separator. The filler with primary particle morphology has a relatively high particle size, thus can better exert its supporting role in the coating layer, thereby enabling the coating layer to have suitable void fraction and pore/channel structure.

In some embodiments, the filler with primary particle morphology in the coating layer is present in an amount of coating layer can from 50 wt.% to 100 wt.%, optionally from 90 wt.% to 99 wt.%, based on the total weight of the filler. In some embodiments, the filler with secondary particle morphology in the coating layer may be present in an amount of ≤ 50 wt.%, optionally from 1 wt.% to 10 wt.%, based on the total weight of the filler.

In some embodiments, the filler with primary particle morphology has an average particle size Dv50 of from 100 nm to 800 nm, optionally from 200 nm to 400 nm. In some embodiments, the filler with secondary particle morphology may have an average particle size Dv50 coating layer can of ≤ 200 nm, optionally from 50 nm to 200 nm.

In some embodiments, the filler with primary particle morphology may have a specific surface area of ≤ 10 m²/g, optionally from 4 m²/g to 9 m²/g. In some embodiments, the filler with secondary particle morphology may have a specific surface area of ≥ 20 m²/g, optionally from 25 m²/g to 50 m²/g.

In some embodiments, the coating layer further comprises a non-granular binder. The type of the non-granular binder is not particularly limited in the present application, and any well-known material having good adhesiveness can be selected.

Optionally, the non-granular binder comprises an aqueous solution-type binder, which has the advantages of good thermodynamic stability and environmental protection, thereby facilitating the preparation and application of the coating slurry. As an example, the aqueous solution-type binder may comprise one or more of an aqueous solution-type acrylic resin (for example, acrylic acid, methacrylic acid, sodium acrylate monomer homopolymer or copolymer with other comonomers), polyvinyl alcohol, isobutylene-maleic anhydride copolymer, and polyacrylamide.

Optionally, the non-granular binder in the coating layer is present in an amount of < 1 wt.%, based on the total weight of the coating layer. The nanocellulose and the filler in the coating layer of the present application can form a stable spatial network structure, thereby enabling the separator to maintain high adhesiveness and good ion transport properties under the premise of reducing the amount of binder.

In some embodiments, the separator may further comprise an adhesive layer, the adhesive layer is disposed on at least part of surface of the coating layer, and the adhesive layer comprises a granular binder. The adhesive layer can not only prevent the coating layer from peeling off and improve the safety performance of the secondary battery, but also improve the interface between the separator and the electrode and improve the cycle performance of the secondary battery.

Optionally, the granular binder includes one or more of a homopolymer or copolymer of acrylate monomer, a homopolymer or copolymer of acrylic monomer, a homopolymer or copolymer of fluorine-containing olefin monomer. The comonomer includes, but is not limited to, one or more of an acrylate monomer, an acrylic monomer, an olefin monomer, a halogen-containing olefin monomer, a fluoroether monomer, and the like.

Optionally, the granular binder comprises a vinylidene fluoride-based polymer, such as a homopolymer of vinylidene fluoride monomer (VDF) and/or a copolymer of vinylidene fluoride monomer and other comonomer(s). Other comonomer(s) may be one or more of an olefin monomer, a fluorine-containing olefin monomer, a chlorine-containing olefin monomer, an acrylate monomer, an acrylic monomer, and a fluoroether monomer. Optionally, the other comonomer(s) may comprise one or more of trifluoroethylene (VF3), chlorotrifluoroethylene (CTFE), 1,2-difluoroethylene, tetrafluoroethylene (TFE), hexafluoropropylene (HFP), perfluoro(alkylvinyl) ethers such as perfluoro(methylvinyl) ether (PMVE), perfluoro(ethylvinyl) ether (PEVE), perfluoro(propylvinyl) ether (PPVE), perfluoro(1,3-dioxole), and perfluoro(2,2-dimethyl-1,3-dioxole) (PDD).

In some embodiments, the separator has a longitudinal thermal shrinkage rate at 150 °C for 1 h of ≤ 6.5%, optionally from 0.5% to 3%.

In some embodiments, the separator has a lateral thermal shrinkage rate at 150 °C for 1 h of ≤ 6.5%, optionally from 0.5% to 3%.

The separator of the present application has low thermal shrinkage rate in both the lateral direction and the longitudinal direction at high temperature of 150 °C, which can further improve the safety performance of the secondary battery.

In some embodiments, the separator has a longitudinal tensile strength of ≥ 2000 kg/cm², optionally from 2500 kg/m² to 4500 kg/m².

In some embodiments, the separator has a lateral tensile strength of ≥ 2000 kg/m², optionally from 2500 kg/m² to 4500 kg/m².

The separator of the present application has high tensile strength in both the lateral direction and the longitudinal direction, which results in small probability of breakage of the separator when the secondary battery is expanded, thereby further improving the safety performance of the secondary battery.

In some embodiments, the separator has an air permeability of ≤ 220 s/100 mL, optionally from 100 s/100 mL to 180 s/100 mL. The separator of the present application has high air permeability, which can improve the ion transport characteristics.

In some embodiments, the separator has a wetting length of ≥ 30 mm, optionally from 30 mm to 80 mm.

In some embodiments, the separator has a wetting speed of ≥ 3 mm/s, optionally from 3 mm/s to 10 mm/s.

The separator of the present application has good electrolyte infiltration characteristics, which can improve the ion transport characteristics and the capacity exertion of the secondary battery.

In this application, the average particle size Dv50 of a material has well-known meaning in the art, and may be measured with known instruments and methods in the art. For example, it can be readily measured according to "Particle Size Analysis - Laser Diffraction Method" of GB/T 19077-2016 using a laser particle size analyzer (for example, Master Size 3000).

In this application, the specific surface area of a material has well-known meaning in the art, and may be measured with known instruments and methods in the art. For example, a method for analyzing and testing specific surface area by nitrogen adsorption is used according to GB/T 19587-2017, and the specific surface area can be calculated by the BET (BrunauerEmmett Teller) method. Optionally, the analyzing and testing specific surface area by nitrogen adsorption may be performd by a Tri-Star Model 3020 specific surface area & porosity analyzer from Micromeritics, USA.

In the present application, the thermal shrinkage rate, tensile strength, and air permeability of the separator have well-known meanings in the art and can be measured by methods known in the art. For example, they may be tested with reference to GB/T 36363-2018.

In this application, the wetting length and wetting speed of the separator have well-known meanings in the art, and may be measured with known instruments and methods in the art. An exemplary test method is as follows: cutting a separator into a sample with a width of 5 mm and a length of 100 mm, and fixing both ends of the sample and placing horizontally; Taking 0.5 mg of electrolyte and dropping it in the center of the sample, and after the specified time (1 min in this application), taking a photo and measuring the length of electrolyte diffusion, thereby obtaining the wetting length and wetting speed of the separator. In order to ensure the accuracy of the test results, a plurality of samples (for example, from 5 to 10) can be tested, and the test results are obtained by calculating average value. The electrolyte may be prepared by mixing ethylene carbonate (EC), ethyl methyl carbonate (EMC), and diethyl carbonate (DEC) in a volume ratio of 30:50:20 to obtain an organic solvent, and then dissolving a fully dried LiPF₆ in the above organic solvent, to prepare an electrolyte with a concentration of 1 mol/L.

The parameters (for example, areal density, thickness, etc.) of coating layer in the above separator are all parameters of coating layer on one side of the porous substrate. When the coating layer is disposed on both sides of the porous substrate, if the coating parameters on either side satisfy the requirements in the present application, the separator is considered to fall within the scope of protection of the present application.

### Preparation methods

A second aspect of embodiments of the present application provides a method for preparing the separator according to the first aspect of embodiments of the present application, comprising the following steps: S1, providing a porous substrate; S2, formulating a coating slurry: mixing nanocellulose and a filler in a predetermined proportion in a solvent to prepare the coating slurry; S3, coating: coating one or more surface of the porous substrate with the coating slurry to form a coating layer, and drying to obtain a separator, wherein the separator comprises a porous substrate and a coating layer disposed on one or more surfaces of the porous substrate, wherein the coating layer comprises nanocellulose and a filler, the coating layer located on one side of the porous substrate has an areal density of σ g/m², the coating layer located on one side of the porous substrate has a thickness of H µm, and the separator satisfies 0.3 ≤ σ ≤ 1.65 and 0.7 ≤ σ/H ≤ 2.2.

In some embodiments, in S2, the solvent may be water, such as deionized water.

In some embodiments, in S2, the coating slurry may further comprise other components, for example, may further comprise a dispersing agent, a wetting agent, a binder, and the like.

In some embodiments, in S2, the solid content of the slurry may be controlled between 28% and 45%, for example, may be between 30% and 38%. When the solid content of the coating slurry is within the above range, the film surface problem of the coating layer and the probability of occurrence of coating unevenness can be effectively reduced, thereby further improving the energy density and safety performance of the secondary battery.

In some embodiments, in S2, can be obtained as follows: S21, providing a cellulose powder having a whiteness of ≥ 80%; S22, mixing and reacting the obtained cellulose powder with a modification solution, washing and removing impurities to obtain cellulose nanowhiskers; S23, adjusting the pH of the obtained cellulose nanowhiskers to neutral (e.g., pH of from 6.5 to 7.5), and grinding and cutting to obtain nanocellulose.

Optionally, in S21, the above cellulose powder having a whiteness of ≥ 80% can be obtained commercially, or can be obtained by a chemical method (e.g., acid hydrolysis method, alkali treatment method, Tempo catalytic oxidation method), a biological method (e.g., enzymatic treatment method), a mechanical method (e.g., ultrafine grinding, ultrasonic crushing, high-pressure homogenization), or the like. The fiber raw material for preparing the above cellulose powder having a whiteness of ≥ 80% may include one or more of plant fibers such as cotton fibers (e.g. Gossypium fibers, kapok fibers), hemp fibers (e.g. sisal fibers, ramie fibers, jute fibers, flax fibers, marihuana fibers, abaca fibers, etc.), brown fibers, wood fibers, bamboo fibers, and grass fibers.

In some embodiments, the cellulose powder having a whiteness of ≥ 80% may also be prepared by: loosening the fiber raw material and slag removal, cooking with an alkaline solution (e.g. aqueous NaOH solution, which may have a concentration of 4 wt.% to 20 wt.%, optionally 5 wt.% to 15 wt.%), and then sequentially subjecting to water washing to remove impurities (e.g., water washing for 3 times to 6 times), bleaching (using for example sodium hypochlorite and/or hydrogen peroxide), acid washing to remove impurities, water washing to remove impurities, water discharging, and air drying, to obtain the cellulose powder.

In some embodiments, in S22, the modification solution may be an acid solution (e.g., an aqueous sulfuric acid solution, an aqueous boric acid solution, an aqueous phosphoric acid solution, an aqueous acetic acid solution) or an alkaline solution (for example a urea solution in organic solvent). Optionally, the modification solution is an acid solution.

Optionally, the acid solution may have a concentration of 5 wt.% to 80 wt.%. When an aqueous sulfuric acid solution is used as the modification solution, the concentration of the acid solution may be 40 wt.% to 80 wt.%, thus nanocellulose having a sulfonic acid group can be obtained. When an aqueous boric acid solution is used as the modification solution, the concentration of the acid solution may be 5 wt.% to 10 wt.%, thus nanocellulose having a boric acid group can be obtained. When an aqueous phosphoric acid solution is used as the modification solution, the concentration of the acid solution may be 45 wt.% to 75 wt.%, thus nanocellulose having a phosphoric acid group can be obtained. When an aqueous acetic acid solution is used as the modification solution, the concentration of the acid solution may be 40 wt.% to 80 wt.%, thus nanocellulose having a carboxylic acid group can be obtained.

Optionally, the urea solution in organic solvent is a urea solutionin xylene, whereby nanocellulose having an amine group can be obtained.

In some embodiments, in S22, optionally, the mass ratio of the cellulose powder to the modification solution may be from 1:2.5 to 1:50, optionally from 1:5 to 1:30.

When an aqueous sulfuric acid solution is used as the modification solution, the mass ratio of the cellulose powder to the acid solution may be from 1:5 to 1:30. When an aqueous boric acid solution is used as the modification solution, the mass ratio of the cellulose powder to the acid solution may be from 1:20 to 1:50. When an aqueous phosphoric acid solution is used as the modification solution, the mass ratio of the cellulose powder to the acid solution may be from 1:5 to 1:30. When an aqueous acetic acid solution is used as the modification solution, the mass ratio of the cellulose powder to the acid solution may be from 1:5 to 1:30. When a urea solution in organic solvent is used as the modification solution, the mass ratio of the cellulose powder to the urea solution in organic solvent may be from 1:4 to 1:40.

In some embodiments, in S22, when the modification solution is an acid solution, the reaction may be carried out at a condition of not higher than 80 °C, optionally at a condition of from 30 °C to 60 °C, and the reaction time between the cellulose powder and the modification solution may be from 0.5 h to 4 h, optionally from 1 h to 3 h.

In some embodiments, in S22, when the modification solution is an alkaline solution, the reaction may be carried out under conditions of from 100 °C to 145 °C, and the reaction time of the cellulose powder and the modification solution may be from 1 h to 5 h.

In some embodiments, in S23, a grinder may be used for grinding, and a high pressure homogenizer may be used for cutting. By adjusting the grinding parameters of the grinder (e.g. number of grinding, grinding time, etc.) as well as the cutting parameters of the high-pressure homogenizer, nanocelluloses with different average diameters and/or different average lengths can be obtained.

In some embodiments, in S3, a coating machine is adopted in the coating step. In the present application, there is no particular limitation on the type of the coating machine, and for example, a commercially available coating machine can be used. The coating machine comprises a gravure roll; the gravure roll is used for transferring the slurry onto the porous substrate.

In some embodiments, in S3, transfer coating, spin spraying, dip coating, or the like may be adopted for the way of coating.

In some embodiments, the method further comprises the step of: S4, secondary coating: coating at least part of surface of the coating layer with a slurry containing a granular binder, and drying to form an adhesive layer. Optionally, spin spraying is used as the coating method.

The method for preparing the separator of the present application provides a coating layer through one coating process, which greatly simplifies the production process of the separator.

Some raw materials and parameters such as their amounts used in the method for preparing the separator of the present application can be determined with respect to the separator of the first aspect of the embodiments of the present application, and will not be repeatedly described herein.

Unless otherwise specified, all raw materials used in the method for preparing the separator of the present application may be commercially available.

### Secondary Battery

The third aspect of embodiments of the present application provides a secondary battery.

Secondary batteries, also known as rechargeable batteries or storage batteries, refer to batteries that can be used continuously by activating active materials through charging after the battery is discharged. Normally, a secondary battery comprises an electrode assembly and an electrolyte, and the electrode assembly comprises a positive electrode plate, a negative electrode plate and a separator, the separator is disposed between the positive electrode plate and the negative electrode plate and is mainly used to prevent short circuit between positive electrode and negative electrode and meanwhile allows active ions to pass through.

The present application has no particular limitation on the type of the secondary battery. For example, the secondary battery may be a lithium ion battery, a sodium ion battery, and the like. In particular, the secondary battery may be a lithium ion secondary battery.

The secondary battery of the third aspect of embodiments of the present application comprises the separator of the first aspect of embodiments of the present application or the separator prepared by the method of the second aspect of embodiments of the present application, wherein the separator is spaced between the positive electrode plate and the negative electrode plate. Optionally, the coating layer of the present application is present on at least the side of the separator close to the negative electrode plate. As a result, the secondary battery of the present application can have the combined characteristics of high energy density, high thermal safety performance and good capacity exertion.

### [Positive electrode plate]

In some embodiments, the positive electrode plate comprises a positive electrode current collector and a positive electrode film layer which is disposed on one or more surfaces of the positive electrode current collector and comprises a positive electrode active material. For example, the positive current collector has two opposite surfaces along the thickness direction of the positive current collector, and the positive electrode film layer is disposed on any one or both of the two opposite surfaces of the positive current collector.

When the secondary battery of the present application is a lithium ion battery, the positive electrode active material may comprise, but is not limited to, one or more of lithium transition metal oxides, lithium-containing phosphates, and their respective modified compounds thereof. Examples of lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of lithium-containing phosphates may include, but are not limited to, one or more of lithium iron phosphate, composite of lithium iron phosphate with carbon, lithium manganese phosphate, composite of lithium manganese phosphate with carbon, lithium manganese iron phosphate, composite of lithium manganese iron phosphate with carbon, and respective modified compounds thereof.

In some embodiments, in order to further increase the energy density of the secondary battery, the positive electrode active material for the lithium-ion battery may comprise one or more of lithium transition metal oxides having general formula LiₐNi_{b}Co_{c}M_{d}OₑA_{f} and modified compounds thereof. 0.8≤a≤1.2, 0.5≤b<1, 0<c<1, 0<d<1, 1≤e≤2, 0≤f≤1, M is selected from one or more of Mn, Al, Zr, Zn, Cu, Cr, Mg, Fe, V, Ti and B, and A s selected from one or more of N, F, S and Cl.

As an example, positive electrode active materials for lithium-ion batteries may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄and LiMnPO₄.

When the secondary battery of the present application is a sodium ion battery, the positive electrode active material may include but not limited to one or more of sodium-containing transition metal oxides, polyanion materials (such as phosphate, fluorophosphate, pyrophosphate, sulfate, and the like salts), and Prussian blue materials.

As an example, a positive electrode active material for a sodium-ion battery may include one or more of NaFeO₂, NaCoO₂, NaCrO₂, NaMnO₂, NaNiO₂, NaNi_{1/2}Ti_{1/2}O₀₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, Prussian blue materials and the materials having the general formula XₚM'_{q}(PO₄)ᵣOₓY₃₋ₓ. In general formula XₚM'_{q}(PO₄)ᵣOₓY₃₋ₓ, 0<p≤4, 0<q≤2, 1≤r≤3, 0≤x≤2, X is selected from one or more of H⁺, Li⁺, Na⁺, K⁺and NH₄⁺, M is a transition metal cation and optionally is one or more of V, Ti, Mn, Fe, Co, Ni, Cu and Zn, and Y is a halogen anion and optionally is one or more of F, Cl and Br.

In the present application, the modified compounds of the above positive electrode active materials may be doping-modified and/or surface coating-modified compounds of the positive electrode active materials.

In some embodiments, the positive electrode film layer may also optionally comprise a conductive agent for positive electrode. The present application does not particularly limit the type of conductive agent for positive electrode, and as an example, the conductive agent for positive electrode includes one or more of superconducting carbon, conductive graphite, acetylene black, carbon black, Ketjen black, carbon dots, carbon nanotubes, graphene, and carbon nanofibers. In some embodiments, the mass content of the conductive agent for positive electrode is ≤ 5%, based on the total mass of the positive electrode film layer.

In some embodiments, the positive electrode film layer may further optionally comprise a binder for positive electrode. The present application does not particularly limit the type of the binder for positive electrode, and as an example, the binder for positive electrode may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resins. In some embodiments, the mass content of the binder for positive electrode is ≤ 5%, based on the total mass of the positive electrode film layer.

In some embodiments, the positive electrode current collector may be a metal foil or a composite current collector. As an example of the metal foil, aluminum foil may be used. The composite current collector may include a base layer of polymeric material and a layer of metallic material formed on one or more surfaces of the base layer of polymeric material. As an example, the metal material may comprise one or more of aluminum, aluminum alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The positive electrode film layer is usually formed by applying a positive electrode slurry on a positive electrode current collector, drying and cold-pressing. The positive electrode slurry is usually formed by dispersing positive electrode active material, an optional conductive agent, an optional binder and any other components in a solvent and stirring them uniformly. The solvent may be N-methylpyrrolidone (NMP), but is not limited thereto.

### [Negative electrode plate]

In some embodiments, the negative electrode plate comprises a negative positive electrode current collector and a negative electrode film layer which is disposed on one or more surfaces of the negative electrode current collector and comprises a negative electrode active material. For example, the negative current collector has two opposite surfaces along the thickness direction of the negative current collector, and the positive electrode film layer is disposed on any one or both of the two opposite surfaces of the negative current collector.

The negative electrode active material can be a negative electrode active material well known in the art for secondary batteries. As an example, the negative electrode active material may include but not limited to one or more of natural graphite, artificial graphite, soft carbon, hard carbon, silicon-based material, tin-based material, and lithium titanate. The silicon-based material may include one or more of elemental silicon, silicon oxide, silicon-carbon composite, silicon-nitrogen composite, and silicon alloy. The tin-based material may include one or more of elemental tin, tin oxide, and tin alloy materials.

In some embodiments, the negative electrode film layer may also optionally comprise a conductive agent for negative electrode. The present application does not particularly limit the type of conductive agent for negative electrode, and as an example, the conductive agent for negative electrode may include one or more of superconducting carbon, conductive graphite, acetylene black, carbon black, Ketjen black, carbon dots, carbon nanotubes, graphene, and carbon nanofibers. In some embodiments, the mass content of the conductive agent for negative electrode is ≤ 5%, based on the total mass of the negative electrode film layer.

In some embodiments, the negative electrode film layer may further optionally comprises a binder for negative electrode. The present application does not particularly limit the type of the binder for negative electrode, and as an example, the binder for negative electrode may include one or more of styrene-butadiene rubber (SBR), water-soluble unsaturated resin SR-1B, aqueous acrylic resins (e.g., polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS). In some embodiments, the mass content of the binder for negative electrode is ≤ 5%, based on the total mass of the negative electrode film layer.

In some embodiments, the negative electrode film layer may further optionally comprises other auxiliary agents. As examples, other auxiliary agents may include thickeners, e.g., sodium carboxymethylcellulose (CMC), PTC thermistor material, etc. In some embodiments, the mass content of the other auxiliary agents is ≤ 2%, based on the total mass of the negative electrode film layer.

In some embodiments, the negative electrode collector may be a metal foil or a composite collector. As an example of a metal foil, a copper foil may be used. The composite current collector may include a base layer of polymeric material and a layer of metallic material formed on one or more surfaces of the base layer of polymeric material. As an example, the metal material may comprise one or more of copper, copper alloy, nickel, nickel alloy, titanium, titanium alloy, silver, and silver alloy. As an example, the base layer of polymeric material may comprise one or more of polypropylene (PP), polyethylene terephthalate (PET), polybutylene terephthalate (PBT), polystyrene (PS), polyethylene (PE), and the like.

The negative electrode film layer is usually formed by applying a negative electrode slurry on a negative electrode collector, drying and cold-pressing. The negative electrode slurry is typically formed by dispersing the negative electrode active material, optional conductive agent, optional binder, and other optional auxiliary agents in a solvent and stirring well. The solvent may be N-methylpyrrolidone (NMP) or deionized water, but is not limited thereto.

The negative electrode plate does not exclude additional functional layers other than the negative electrode film layer. For example, in some embodiments, the negative electrode plate described in the present application further comprises a conductive primer layer (such as composed of a conductive agent and a binder) sandwiched between the negative electrode current collector and the negative electrode film layer, and disposed on the surface of the negative electrode current collector. In some other embodiments, the negative electrode plate described in this application further comprises a protective layer covering the surface of the negative electrode film layer.

### [Electrolyte]

During the charging and discharging process of the battery, active ions are intercalated and deintercalated back and forth between the positive electrode plate and the negative electrode plate, and the electrolyte (or electrolytic solution) functions as conducting active ions between the positive electrode plate and the negative electrode plate. There is no specific limitation on the type of electrolyte in the present application, and it can be selected according to actual needs.

The electrolyte includes an electrolyte salt and a solvent. There is no specific limitation on the type of solvent and the electrolyte salt, and they can be selected according to actual needs.

When the secondary battery of the present application is a lithium ion battery, as an example, the electrolyte salt may comprise one or more of lithium hexafluorophosphate (LiPF₆), lithium tetrafluoroborate (LiBF₄), lithium perchlorate (LiClO₄), lithium hexafluoroarsenate (LiAsF₆), lithium difluorosulfimide (LiFSI), lithium bistrifluoromethanesulfonimide (LiTFSI), lithium trifluoromethanesulfonate (LiTFS), lithium difluoro(oxalate)borate (LiDFOB), bis(oxalate)borate (LiBOB), lithium difluorophosphate (LiPO₂F₂), lithium difluorobisoxalate phosphate (LiDFOP), and lithium tetrafluorooxalate phosphate (LiTFOP).

When the secondary battery of the present application is a sodium ion battery, as an example, the electrolyte salt may comprise, but is not limited to, one or more of sodium hexafluorophosphate (NaPF₆), sodium tetrafluoroborate (NaBF₄), sodium perchlorate (NaClO₄), sodium hexafluoroarsenate (NaAsF₆), sodium bisfluorosulfonimide (NaFSI), sodium bistrifluoromethanesulfonimide (NaTFSI), sodium trifluoromethanesulfonate (NaTFS), sodium difluoro(oxalate)borate (NaDFOB), sodium bis(oxalate)borate (NaBOB), sodium difluorophosphate (NaPO₂F₂), sodium difluorobisoxalate phosphate (NaDFOP) and sodium tetrafluorooxalate phosphate (NaTFOP).

As an example, the solvent may comprise, but is not limited to, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethylsulfone (MSM), methylethylsulfone (EMS), and diethylsulfone (ESE).

In some embodiments, the electrolytic solution may optionally comprise an additive. For example, the additives may comprise negative electrode film-forming additives, positive electrode film-forming additives, and additives that can improve certain performance of the battery, such as additives that improve overcharging performance of the battery, additives that improve high-temperature performance of the battery, and additives that improve low-temperature power/rating performance of the battery.

In some embodiments, the positive electrode plate, the separator, and the negative electrode plate may be fabricated into an electrode assembly by a winding process and/or a lamination process.

In some embodiments, the secondary battery may comprise an outer packaging. The outer packaging may be used to encapsulate the electrode assembly and the electrolyte.

In some embodiments, the outer packaging of the secondary battery may be a hard housing, such as a hard plastic housing, aluminum housing, steel housing, or the like. The outer packaging of the secondary battery may also be a soft pack, such as a pouch type soft pack. The material of the soft pack may be plastic, such as one or more of polypropylene (PP), polybutylene terephthalate (PBT), and polybutylene succinate (PBS).

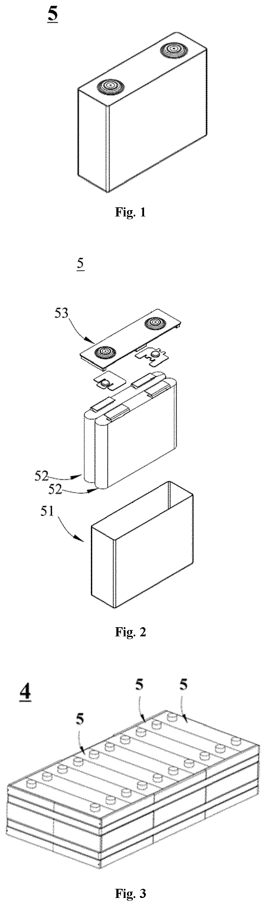

The present application does not have particular limitation on the shape of the secondary battery, which may be cylindrical, square, or other arbitrary shapes. Fig. 1 shows a battery 5 of a square structure as an example.

In some embodiments, referring to Fig. 2, the outer packaging may include a housing 51 and a cover plate 53. The housing 51 may include a bottom plate and side plates connected to the bottom plate, and the bottom plate and the side plate are combined to form an accommodating cavity. The housing 51 has an opening communicating with the accommodating cavity, and the cover plate 53 is used for covering the opening to close the accommodating cavity. The positive electrode plate, the negative electrode plate, and the separator may be stacked and/or wounded into an electrode assembly 52. The battery assembly 52 is encapsulated in the accommodating cavity. The electrolyte is infiltrated in the electrode assembly 52. The number of electrode assemblies 52 included in the secondary battery 5 may be one or multiple, and may be adjusted according to requirements.

The preparation method of the secondary battery of the present application is well known. In some embodiments, a positive electrode plate, a separator, a negative electrode plate, and electrolytic solution can be assembled to form a secondary battery. As an example, the positive electrode plate, the separator, and the negative electrode plate can be formed into an electrode assembly by a winding process and/or a laminating process, the electrode assembly is placed in an outer packaging and dried, followed by injection with the electrolyte; after the processes including vacuum encapsulation, steady standing, chemical formation, and shaping, a secondary battery is obtained.

In some embodiments, the secondary battery of the present application can be assembled into a battery module, and the number of secondary batteries contained in the battery module can be multiple, and the specific number can be adjusted according to the application and capacity of the battery module.

Fig. 3 is a schematic diagram of a battery module 4 as an example. Referring to Fig. 3, in the battery module 4, a plurality of secondary batteries 5 may be disposed sequentially in the length direction of the battery module 4. Apparently, they may also be disposed in any other manner. Furthermore, the plurality of secondary batteries 5 may be fixed by fasteners.

Optionally, the battery module 4 may further include a housing having an accommodating space in which a plurality of secondary batteries 5 are accommodated.

In some embodiments, the above-mentioned battery module may also be assembled into a battery pack, and the number of battery modules contained in the battery pack can be adjusted according to the application and capacity of the battery pack.

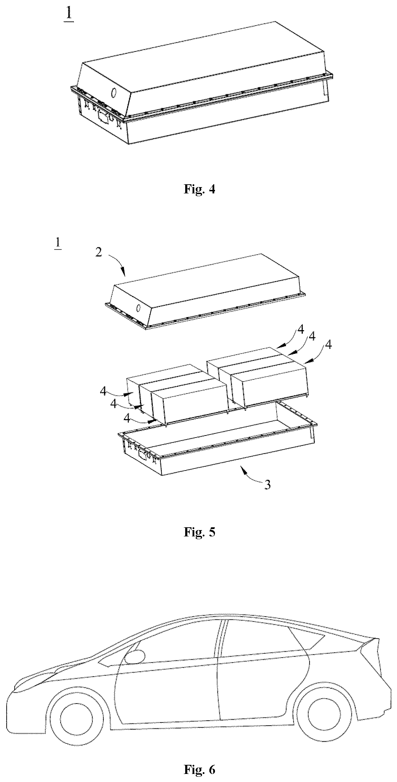

Figs. 4 and 5 are schematic diagrams of battery pack 1 as an example. As shown in Figs. 4 and 5, the battery pack 1 may comprise a battery case and a plurality of the battery modules 4 disposed in the battery case. The battery case comprises an upper case body 2 and a lower case body 3. The upper case body 2 is used for covering the lower case body 3 to form a closed space for receiving the battery modules 4. A plurality of battery modules 4 can be disposed in the battery case in any manner.

### Electrical device

The fourth aspect of embodiments of the present application provides an electrical device comprising one or more of the secondary battery, battery module, and battery pack of the present application. The secondary battery, battery module or battery pack can be used as a power source of the electrical device, and can also be used as an energy storage unit of the electrical device. The electrical device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, etc.

The electrical device may comprise the secondary battery, the battery module or the battery pack selected according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, etc. The electric device is generally required to be light and thin, and a secondary battery can be used as a power source.

### Examples

The following examples are intended to describe the present application more specifically, merely for the purpose of illustration. Various modifications and variations within the scope of the present application are apparent to those skilled in the related art. Unless otherwise stated, all parts, percentages, and ratios reported in the following examples are based on mass, and all reagents used in the examples are commercially available or synthesized by conventional methods, and can be directly obtained without further treatment, and the instruments used in the examples are commercially available.

### Preparation of modified nanocellulose C1

(1) Preparation of cellulose powder: After loosening the Gossypium linter and slag removal by a cotton opener, the obtained mixture was cooked at 150 °C with 5 wt.% NaOH aqueous solution for 2 hours, and then washed with water to remove impurities (3 times of water washing), bleached with sodium hypochlorite, washed with diluted hydrochloric acid to remove impurities, washed with water to remove impurities (1 time of water washing), water discharged and dried with air flow to obtain Gossypium cellulose powder with whiteness of ≥ 85%.
(2) Esterification of cellulose: 1 kg of the obtained Gossypium cellulose powder was mixed with 30 kg of 60 wt.% sulfuric acid aqueous solution, and the reaction was carried out at 60°C for 1.5 h. After the reaction was completed, by washing with water (3 times of water washing), filtering, and removing acid and impurities, the cellulose nanowhiskers with sulfonic acid modifying groups were obtained.
(3) Neutralization of cellulose: The pH of cellulose nanowhiskers with sulfonic acid modifying groups was adjusted to neutral with 10 wt.% aqueous NaOH solution, and then dispersed with a grinder at high speed for 2.5 h. Then a high pressure homogenizer was used for nanoscale cutting, to obtain the nanocellulose with sulfonic acid modifying groups having an average length of 375 nm and an average diameter of 25 nm, and the molar ratio of sulfonic acid groups to hydroxyl groups of 5:3.

### Preparation of modified nanocellulose C2

(1) Preparation of cellulose powder: After loosening the Gossypium linter and slag removal by a cotton opener, the obtained mixture was cooked at 150 °C with 5 wt.% NaOH aqueous solution for 2 hours, and then washed with water to remove impurities (3 times of water washing), bleached with sodium hypochlorite, washed with diluted hydrochloric acid to remove impurities, washed with water to remove impurities (1 time of water washing), water discharged and dried with air flow to obtain Gossypium cellulose powder with whiteness of ≥ 85%.
(2) Esterification of cellulose: 1 kg of the obtained Gossypium cellulose powder was mixed with 30 kg of 7 wt.% boric acid aqueous solution, and the reaction was carried out at 60°C for 1.5 h. After the reaction was completed, by washing with water (3 times of water washing), filtering, and removing acid and impurities, the cellulose nanowhiskers with boric acid group were obtained.
(3) Neutralization of cellulose: The pH of cellulose nanowhiskers with boric acid group was adjusted to neutral with 10 wt.% aqueous NaOH solution, and then dispersed with a grinder at high speed for 2.5 h. Then a high pressure homogenizer was used for nanoscale cutting, to obtain the nanocellulose with boric acid modifying groups having an average length of 375 nm and an average diameter of 25 nm, and the molar ratio of boric acid group to hydroxyl group of 2:3.

### Preparation of modified nanocellulose C3

(1) Preparation of cellulose powder: After loosening the Gossypium linter and slag removal by a cotton opener, the obtained mixture was cooked at 150 °C with 5 wt.% NaOH aqueous solution for 2 hours, and then washed with water to remove impurities (3 times of water washing), bleached with sodium hypochlorite, washed with diluted hydrochloric acid to remove impurities, washed with water to remove impurities (1 time of water washing), water discharged and dried with air flow to obtain Gossypium cellulose powder with whiteness of ≥ 85%.
(2) Esterification of cellulose: 1 kg of the obtained Gossypium cellulose powder was mixed with 30 kg of 75 wt.% phosphoric acid aqueous solution, and the reaction was carried out at 60°C for 4 h. After the reaction was completed, by washing with water (3 times of water washing), filtering, and removing acid and impurities, the cellulose nanowhiskers with phosphoric acid group were obtained.
(3) Neutralization of cellulose: The pH of cellulose nanowhiskers with phosphoric acid group was adjusted to neutral with 10 wt.% aqueous NaOH solution, and then dispersed with a grinder at high speed for 2.5 h. Then a high pressure homogenizer was used for nanoscale cutting, to obtain the nanocellulose with phosphoric acid modifying groups having an average length of 375 nm and an average diameter of 25 nm, and the molar ratio of phosphoric acid group to hydroxyl group of 7:3.

The molar ratio of modifying groups to hydroxyl groups can be measured by the following method: according to the phthalic anhydride method in GB/T 12008.3-2009, the hydroxyl values of raw material cellulose and modified nanocellulose (milligrams of potassium hydroxide equivalent to the hydroxyl content per gram of sample) were respectively tested, and the obtained numerical unit was mg KOH/g, which was converted into mmol/g as the hydroxyl content. The content of the modifying group (i.e. the content of the modified hydroxyl group) can be obtained by subtracting the hydroxyl content of the modified nanocellulose from the hydroxyl content of raw material cellulose, and thus the molar ratio of the modifying group to the hydroxyl group can be calculated.

### Example 1

### Preparation of separator

Providing a PE porous substrate: having thickness of 4 µm and porosity of 40%, and an ionic conductivity of 1.20 mS/cm.

Formulating a coating slurry: mixing evenly the above prepared modified nanocellulose C1, alumina (with primary particle morphology, average particle size Dv50 of 300 nm) as a filler, and an aqueous solution type polyacrylic acid as a binder at a mass ratio of 15:84.2:0.8 in an appropriate amount of deionized water as solvent to obtain a coating slurry with a solid content of 35 wt.%.

Coating: coating both surfaces of the PE porous substrate with the formulated coating slurry using a coating machine, and a separator was obtained by drying and slitting steps. The coating layer on one side of PE porous substrate had an areal density of 0.9 g/m² and a thickness of 0.45 µm.

### Preparation of positive electrode plate

The positive electrode active material LiNi_{0.8}Co_{0.1}Mn_{0.1}O₂ (NCM811), carbon black (Super P) as conductive agent, and polyvinylidene fluoride (PVDF) as binder were uniformly mixed at a mass ratio of 96.2:2.7:1.1 in an appropriate amount of solvent N-methylpyrrolidone (NMP) to obtain a positive electrode slurry; the positive electrode slurry was applied on an aluminum foil as positive electrode collector, and then dried and cold-pressed, slitted, and cut, to give the positive electrode plate. The positive electrode plate had an areal density of 0.207 mg/mm² and a compacted density of 3.5 g/cm³.

### Preparation of negative electrode plate

Artificial graphite as negative electrode active material, carbon black (Super P) as conductive agent, styrene butadiene rubber (SBR) as binder, and carboxymethyl cellulose sodium (CMC) were mixed at a mass ratio of 96.4:0.7:1.8:1.1 in a suitable solvent deionized water to obtain a negative electrode slurry; the negative electrode slurry was applied onto a copper foil as negative electrode current collector; and after processes including drying, cold-pressing, slitting and cutting, the negative electrode plate was obtained. The negative electrode plate had an areal density of 0.126 mg/mm² and a compacted density of 1.7 g/cm³.

### Preparation of electrolyte

Ethylene carbonate (EC) and ethyl methyl carbonate (EMC) at a volume ratio of 30:70 were mixed to obtain an organic solvent, and then a fully dried LiPF₆ was dissolved in the above organic solvent, to prepare an electrolyte with a concentration of 1 mol/L.

### Preparation of secondary battery

The positive electrode plate, the separator, and the negative electrode plate were stacked and wound in sequence to obtain an electrode assembly; the electrode assembly was placed in a outer packaging and dried, followed by injection with the electrolyte; after the processes including vacuum encapsulation, standing, chemical formation, and shaping, a secondary battery was obtained.

### Examples 2-18 and Comparative Examples 1-5

The secondary batteries were prepared by a method similar to that of Example 1, except that the preparation parameters of the separators were different, and the specific parameters were detailed in Table 1.

### Example 19

The secondary battery was prepared by a method similar to that of Example 3, except that alumina with secondary particle morphology having an average particle size Dv50 of 150 nm was used as filler.

### Example 20

The secondary battery was prepared by a method similar to that of Example 3, except that alumina with primary particle morphology (having an average particle size Dv50 of 300 nm) and alumina with secondary particle morphology (having an average particle size Dv50 of 150 nm) were used as the filler, and the mass ratio of the alumina with primary particle morphology to the alumina with secondary particle morphology was 1:1.

### Test section

### (1) Thermal shrinkage rate test of separator

Sample preparation: The separator prepared above was punched into samples with a width of 50 mm and a length of 100 mm using a punching machine; and five parallel samples were placed on A4 paper and fixed; and then the A4 paper loaded with the samples was placed on corrugated paper with a thickness of from 1 mm to 5 mm.

Sample test: a blast oven was set to the temperature of 150 °C; After the temperature reached the set temperature and stabilized for 30 minutes, the A4 paper placed on the corrugated paper was placed into the blast oven, following by starting timing until the set time (1 h in this application) was reached; the length and width of the separator were measured, and the values were marked as a and b, respectively.

Calculation of thermal shrinkage rate: machine direction (MD) heat shrinkage rate = [(100-a)/100] × 100%, transverse direction (TD) thermal shrinkage rate = [(50-b)/50] × 100%, and the average value of five replicate samples was taken as the test result.

### (2) Air permeability test of separator

Time required for 100 mL of air to pass through the separator at room temperature was tested, and the average value of 5 parallel samples was taken as the test result. The test instrument may be the Kumagai KRK Wangyan air permeability tester.

### (3) Ionic conductivity of porous substrate and separator

Ionic conductivity of the porous substrate and ionic conductivity of the separator is tested through AC impedance spectroscopy experiment. Specifically, the porous substrate or separator is cut into a disc with a certain area, dried, placed between two stainless steel electrodes. After the disc absorbs a sufficient amount of electrolyte and is then sealed, a button cell is formed. An AC impedance spectroscopy experiment is carried out. In the obtained AC impedance spectrum, the intersection point of the linear part and the real axis represents the bulk resistance of the electrolyte, and then the ion conductivity of the porous substrate or the separator can be calculated according to the formula σ = (L/A) × R. L denotes the thickness (cm) of the porous substrate or the separator, and A denotes the contact area (cm²) of the stainless steel electrode with the porous substrate or separator, and R denotes the bulk resistance of the electrolyte (mS).

The electrolyte as used is formulated by the following way: mixing ethylene carbonate (EC), ethyl methyl carbonate (EMC), and diethyl carbonate (DEC) in a volume ratio of 30:50:20 to obtain an organic solvent, and then dissolving a fully dried LiPF₆ in the above organic solvent, to prepare an electrolyte with a concentration of 1 mol/L.

It can be seen from Table 1 that in Examples 1-20, by providing a coating layer including nanocellulose and a filler on two surfaces of the porous substrate of the separator and using a coating layer having an areal density σ g/m² and thickness H µm satisfying 0.3 ≤ σ ≤ 1.65 and 0.7 ≤ σ/H ≤ 2.2, the obtained separators can have the combined characteristics of low heat shrinkage and high air permeability, and thus the secondary batteries using the separators can have the combined characteristics of high energy density, high thermal safety performance, and good capacity exertion.

Combining the test results of Examples 1-8 and Comparative Examples 1-2, Examples 9-13 and Comparative Example 3, Examples 14-18 and Comparative Examples 4-5, it can also be seen that when the areal density σ g/m² and the thickness of coating layer do not satisfy the above relationship, for example when σ/H is greater than 2.2 or σ/H is less than 0.7 or σ is greater than 1.65, the areal density and the thickness of the coating layer are not reasonably matched with each other, resulting in poor overlap effect of nanocellulose and filler in the coating layer; thus, a stable spatial network structure with suitable pore structure cannot be formed, so the separator cannot have the combined characteristics of low thermal shrinkage and high air permeability, and the secondary battery using the separation film cannot have the combined characteristics of high energy density, high thermal safety performance and good capacity exertion.

It should be noted that the present application is not limited to the above-mentioned embodiments. The above-mentioned embodiments are merely examples, and within the scope of the technical solutions of the present application, embodiments that have substantially the same configuration as the technical idea and exert the same effects are included in the technical scope of the present application. In addition, without departing from the scope of the present application, various modifications conceivable by those skilled in the art can be introduced to the embodiments, and other forms constructed by combining some components in the embodiments are also included in the scope of the present application.

**Table 1**

| No. | Nanocellulose | | Filler | | | Mass ratio of nanocellulose and filler | Coating layer | | | Porous substrate | Separator | λ₁/λ₂ | Thermal shrinkage rate at 150 °C/1h | | Air permeability (s/100 mL) |
|---|---|---|---|---|---|---|---|---|---|---|---|---|---|---|---|
| | Types | wt.% | Types | Morphology | wt.% | | Areal density σ (g/m²) | Thickness H (µm) | o/H | Ionic conductivity λ₁ (mS/cm) | Ionic conductivity λ₂ (mS/cm) | | MD | TD | |
| Example 1 | C1 | 15 | Alumina | Primary particle | 84.2 | 0.18 | 0.90 | 0.45 | 2.00 | 1.20 | 0.78 | 1.54 | 2.00% | 2.00% | 200.0 |
| Example 2 | C1 | 15 | Alumina | Primary particle | 84.2 | 0.18 | 0.90 | 0.50 | 1.80 | 1.20 | 0.80 | 1.49 | 2.05% | 2.00% | 190.0 |
| Example 3 | C1 | 15 | Alumina | Primary particle | 84.2 | 0.18 | 0.90 | 0.60 | 1.50 | 1.20 | 0.86 | 1.39 | 2.00% | 2.35% | 176.0 |
| Example 4 | C1 | 15 | Alumina | Primary particle | 84.2 | 0.18 | 0.90 | 0.70 | 1.29 | 1.20 | 0.96 | 1.25 | 2.45% | 2.50% | 175.0 |
| Example 5 | C1 | 15 | Alumina | Primary particle | 84.2 | 0.18 | 1.25 | 0.80 | 1.56 | 1.20 | 1.10 | 1.09 | 2.00% | 1.96% | 170.0 |
| Example 6 | C1 | 15 | Alumina | Primary particle | 84.2 | 0.18 | 1.00 | 0.65 | 1.54 | 1.20 | 1.10 | 1.09 | 2.15% | 2.09% | 163.0 |
| Example 7 | C1 | 15 | Alumina | Primary particle | 84.2 | 0.18 | 0.80 | 0.65 | 1.23 | 1.20 | 1.13 | 1.07 | 2.80% | 3.00% | 155.0 |
| Example 8 | C1 | 15 | Alumina | Primary particle | 84.2 | 0.18 | 0.56 | 0.80 | 0.70 | 1.20 | 1.13 | 1.06 | 3.92% | 3.89% | 150.0 |
| Comparative Example 1 | C1 | 15 | Alumina | Primary particle | 84.2 | 0.18 | 1.45 | 0.65 | 2.24 | 1.20 | 0.64 | 1.86 | 1.90% | 1.85% | 228.0 |
| Comparative Example 2 | C1 | 15 | Alumina | Primary particle | 84.2 | 0.18 | 0.90 | 1.50 | 0.60 | 1.20 | 1.15 | 1.04 | 10.25% | 15.00% | 148.0 |
| Example 9 | C2 | 25 | Alumina | Primary particle | 74.2 | 0.34 | 0.74 | 0.40 | 1.85 | 1.20 | 0.70 | 1.73 | 3.15% | 3.40% | 170.0 |
| Example 10 | C2 | 25 | Alumina | Primary particle | 74.2 | 0.34 | 0.62 | 0.43 | 1.44 | 1.20 | 0.75 | 1.60 | 3.85% | 3.50% | 157.0 |
| Example 11 | C2 | 25 | Alumina | Primary particle | 74.2 | 0.34 | 0.55 | 0.50 | 1.10 | 1.20 | 0.80 | 1.50 | 4.00% | 4.40% | 155.0 |
| Example 12 | C2 | 25 | Alumina | Primary particle | 74.2 | 0.34 | 0.48 | 0.57 | 0.84 | 1.20 | 0.89 | 1.34 | 4.25% | 5.00% | 145.0 |
| Example 13 | C2 | 25 | Alumina | Primary particle | 74.2 | 0.34 | 0.53 | 0.70 | 0.76 | 1.20 | 1.02 | 1.18 | 5.60% | 6.35% | 140.0 |
| Comparative Example 3 | C2 | 25 | Alumina | Primary particle | 74.2 | 0.34 | 0.55 | 0.87 | 0.63 | 1.20 | 1.16 | 1.04 | 12.65% | 11.50% | 139.0 |
| Example 14 | C3 | 35 | Alumina | Primary particle | 64.2 | 0.55 | 1.42 | 0.72 | 1.97 | 1.20 | 0.50 | 2.38 | 1.50% | 1.50% | 220.0 |
| Example 15 | C3 | 35 | Alumina | Primary particle | 64.2 | 0.55 | 1.50 | 0.80 | 1.88 | 1.20 | 0.63 | 1.90 | 1.50% | 1.65% | 215.0 |
| Example 16 | C3 | 35 | Alumina | Primary particle | 64.2 | 0.55 | 1.48 | 1.03 | 1.44 | 1.20 | 0.84 | 1.43 | 1.85% | 1.70% | 199.0 |
| Example 17 | C3 | 35 | Alumina | Primary particle | 64.2 | 0.55 | 1.56 | 1.20 | 1.30 | 1.20 | 0.89 | 1.34 | 2.50% | 2.75% | 195.0 |
| Example 18 | C3 | 35 | Alumina | Primary particle | 64.2 | 0.55 | 1.65 | 1.50 | 1.10 | 1.20 | 1.00 | 1.20 | 3.00% | 3.00% | 180.0 |
| Comparative Example 4 | C3 | 35 | Alumina | Primary particle | 64.2 | 0.55 | 1.50 | 0.65 | 2.31 | 1.20 | 0.45 | 2.69 | 1.10% | 1.05% | 241.0 |
| Comparative Example 5 | C3 | 35 | Alumina | Primary particle | 64.2 | 0.55 | 1.80 | 0.90 | 2.00 | 1.20 | 0.60 | 1.98 | 1.50% | 1.50% | 230.5 |
| Example 19 | C1 | 15 | Alumina | Secondary particle | 84.2 | 0.18 | 0.90 | 0.60 | 1.50 | 1.20 | 0.92 | 1.30 | 1.66% | 1.68% | 188.0 |
| Example 20 | C1 | 15 | Alumina | Primary particle/secondary particle | 42.1/ 42.1 | 0.18 | 0.90 | 0.60 | 1.50 | 1.20 | 0.88 | 1.36 | 1.74% | 1.82% | 180.0 |

## Claims

1. A separator, comprising a porous substrate and a coating layer disposed on one or more surfaces of the porous substrate, wherein the coating layer comprises nanocellulose and a filler, and the coating layer located on one side of the porous substrate has an areal density of σ g/m², the coating layer located on one side of the porous substrate has a thickness of H µm, and the separator satisfies 0.3 ≤ σ ≤ 1.65 and 0.7 ≤ σ/H ≤ 2.2.

2. The separator according to claim 1, wherein
0.6 ≤ σ ≤ 1.5, optionally, 0.7 ≤ σ ≤ 1.3; and/or,
0.9 ≤ σ/H ≤ 1.8, optionally, 0.9 ≤ σ/H ≤ 1.6; and/or,
0 < H ≤ 1.5, optionally, 0.5 ≤ H ≤ 0.8.

3. The separator according to claim 1 or 2, wherein the porous substrate has an ion conductivity of λ₁ mS/cm, the separator has an ion conductivity of λ₂ mS/cm, and the separator satisfies: 1 < λ₁/λ₂ ≤ 3, optionally, 1.05 ≤ λ₁/λ₂ ≤ 1.8.

4. The separator according to claim 3, wherein
0.5 ≤ λ₁ ≤ 1.8, optionally, 1.0 ≤ λ₁ ≤ 1.4; and/or,
0.2 ≤ λ₂ ≤ 1.5, optionally, 0.5 ≤ λ₂ ≤ 1.2.

5. The separator according to any one of claims 1 to 4, wherein the nanocellulose comprises one or more of an unmodified nanocellulose and a modified nanocellulose, and optionally is a modified nanocellulose,
optionally, the modified nanocellulose comprises a modifying group, and the modifying group comprises one or more of an amino group, a carboxylic acid group, an aldehyde group, a sulfonic acid group, a boric acid group, and a phosphoric acid group, and further optionally comprises one or more of a sulfonic acid group, a boric acid group, and a phosphoric acid group; and/or,
optionally, the modified nanocellulose comprises a hydroxyl group and a modifying group, and a molar ratio of the modifying group to the hydroxyl group is from 1:4 to 4:1, further optionally from 2:3 to 7:3.

6. The separator according to any one of claims 1 to 5, wherein the nanocellulose satisfies one or more of the following conditions (1) to (3):
(1) the nanocellulose has an aspect ratio of from 5 to 80, optionally from 10 to 40;
(2) the nanocellulose has an average diameter of ≤ 40 nm, optionally from 10 nm to 35 nm;
(3) the nanocellulose has an average length of from 100 nm to 600 nm, optionally from 200 nm to 450 nm.

7. The separator according to any one of claims 1 to 6, wherein
the filler comprises one or more of inorganic particles and organic particles; and/or,
the filler has a decomposition temperature of 200 °C or higher.

8. The separator according to claim 7, wherein the inorganic particles comprise one or more of inorganic particles with a dielectric constant of 5 or more, inorganic particles with ion conductibility but without ion storage capability, and inorganic particles capable of undergoing electrochemical reactions;
optionally, the inorganic particles with a dielectric constant of 5 or more comprise one or more of: oehmite, aluminum oxide, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb(Zr,Ti)O₃, Pb₁₋ₘLaₘZr₁₋ₙTiₙO₃, Pb(Mg₃Nb_{2/3})O₃-PbTiO₃ and their respective modified inorganic particles, 0<m<1, 0<n<1;
optionally, the inorganic particles with ion conductibility but without ion storage capability comprise one or more of Li₃PO₄, lithium titanium phosphate Liₓ₁Ti_{y1}(PO₄)₃, lithium aluminum titanium phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3} and P₂S₅ type glass Liₓ₈P_{y8}S_{z4}, wherein 0 < x1 < 2, 0 < y1 < 3, 0 < x2 < 2, 0 < y2 < 1, 0 < z1 < 3, 0 < x3 < 4, 0 < y3 < 13, 0 < x4 < 2, 0 < y4 < 3, 0 < x5 < 4, 0 < y5 < 1, 0 < z2 < 1, 0 < w < 5, 0 < x6 < 4, 0 < y6 < 2, 0 < x7 < 3, 0 < y7 < 2, 0 < z3 < 4, 0< x8 < 3, 0 < y8 < 3,0 < z4 < 7;
optionally, the inorganic particles capable of undergoing electrochemical reactions comprise one or more of lithium-containing transition metal oxides, lithium-containing phosphates, carbon-based materials, silicon-based materials, tin-based materials, and lithium-titanium compounds.

9. The separator according to claim 7, wherein the organic particles comprise one or more of polyethylene particles, polypropylene particles, polystyrene particles, cellulose, cellulose modifiers, melamine resin particles, phenolic resin particles, polyester particles, organic silicon resin particles, polyimide particles, polyamide imide particles, polyarylamide particles, polyphenylene sulfide particles, polysulfone particles, polyethersulfone particles, polyetheretherketone particles, polyaryletherketone particles, and copolymers of butyl acrylate and ethyl methacrylate, optionally comprise one or more of melamine formaldehyde resin particles, phenolic resin particles, polyester particles, organic silicon resin particles, polyimide particles, polyamide imide particles, polyarylamide particles, polyphenylene sulfide particles, polysulfone particles, polyethersulfone particles, polyetheretherketone particles, and polyaryletherketone particles.

10. The separator according to any one of claims 1 to 9, wherein
the nanocellulose in the coating layer is present in an amount of ≥ 8 wt.%, optionally from 10 wt.% to 35 wt.%, based on the total weight of the coating layer; and/or,
the filler in the coating layer is present in an amount of ≥ 50 wt.%, optionally from 65 wt.% to 90 wt.%, based on the total weight of the coating layer; and/or,
a mass ratio of the nanocellulose and the filler in the coating is from 0.1 to 0.95, and optionally from 0.18 to 0.6.

11. The separator according to any one of claims 1 to 10, wherein the filler comprises a primary particle morphology, a secondary particle morphology formed by aggregation of primary particles, or a combination thereof;
optionally, the filler satisfies one or more of the following conditions (1) to (5):
(1) the filler with primary particle morphology in the coating layer is present in an amount of from 50 wt.% to 100 wt.%, optionally from 90 wt.% to 99 wt.%, based on the total weight of the filler;
(2) the filler with primary particle morphology has an average particle size Dv50 of from 100 nm to 800 nm, optionally from 200 nm to 400 nm;
(3) the filler with secondary particle morphology has an average particle size Dv50 of ≤ 200 nm, optionally from 50 nm to 200 nm;
(4) the filler with primary particle morphology has a specific surface area of ≤ 10 m²/g, optionally from 4 m²/g to 9 m²/g;
(5) the filler with secondary particle morphology has a specific surface area of ≥ 20 m²/g, optionally from 25 m²/g to 50 m²/g.

12. The separator according to any one of claims 1 to 11, wherein
the porous substrate has a thickness of ≤ 6 µm, optionally from 3 µm to 5 nm; and/or,
the porous substrate has a porosity of from 30% to 60%.

13. The separator according to any one of claims 1 to 12, wherein the coating layer further comprises a non-granular binder,
optionally, the non-granular binder comprises an aqueous solution-type binder;
optionally, the non-granular binder in the coating layer is present in an amount of < 1 wt.%, based on the total weight of the coating layer.

14. The separator according to any one of claims 1 to 13, wherein the separator further comprises an adhesive layer, the adhesive layer is disposed on at least part of surface of the coating layer, and the adhesive layer comprises a granular binder, and optionally, the granular binder comprises one or more of a homopolymer or copolymer of acrylate monomer, a homopolymer or copolymer of acrylic monomer, a homopolymer or copolymer of fluorine-containing olefin monomer.

15. The separator according to any one of claims 1 to 14, wherein the separator satisfies one or more of the following conditions (1) to (7):
(1) the separator has a longitudinal thermal shrinkage rate at 150 °C for 1 h of ≤ 6.5%, optionally from 0.5% to 3%;
(2) the separator has a lateral thermal shrinkage rate at 150 °C for 1 h of ≤ 6.5%, optionally from 0.5% to 3%;
(3) the separator has a longitudinal tensile strength of ≥ 2000 kg/cm², optionally from 2500 kg/m² to 4500 kg/m²;
(4) the separator has a lateral tensile strength of ≥ 2000 kg/m², optionally 2500 kg/m² to 4500 kg/m²;
(5) the separator has a wetting length of ≥ 30 mm, optionally from 30 mm to 80 mm;
(6) the separator has a wetting speed of ≥ 3 mm/s, optionally from 3 mm/s to 10 mm/s; and
(7) the separator has an air permeability of ≤ 220 s/100 mL, optionally from 100 s/100 mL to 180 s/100 mL.

16. A method for preparing the separator according to any one of claims 1 to 15, comprising the following steps: S1, providing a porous substrate; S2, preparing a coating slurry: mixing nanocellulose and a filler in a predetermined proportion in a solvent to formulate the coating slurry; S3, coating: coating one or more surfaces of the porous substrate with the coating slurry to form a coating layer, and drying to obtain a separator,
wherein the separator comprises a porous substrate and a coating layer disposed on one or more surfaces of the porous substrate, the coating layer comprises nanocellulose and a filler, the coating layer located on one side of the porous substrate has an areal density of σ g/m², the coating layer located on one side of the porous substrate has a thickness of H µm, and the separator satisfies 0.3 ≤ σ ≤ 1.65 and 0.7 ≤ σ/H ≤ 2.2.

17. The method according to claim 16, further comprising the step of: S4, secondary coating: coating at least part of surface of the coating layer with a slurry containing a granular binder, and drying to form an adhesive layer.

18. A secondary battery, comprising the separator according to any one of claims 1 to 15 or the separator prepared by the method according to any one of claims 16 to 17.

19. An electrical device, comprising the secondary battery according to claim 18.
